(19) **Europäisches Patentamt / European Patent Office / Office européen des brevets**

(11) **EP 4 425 423 B1**

(12) **EUROPEAN PATENT SPECIFICATION**

(45) Date of publication and mention of the grant of the patent:
**28.01.2026 Bulletin 2026/05**

(21) Application number: **23856325.8**

(22) Date of filing: **04.07.2023**

(51) International Patent Classification (IPC):
*G06T 5/30* (2006.01)  *G06T 5/50* (2006.01)
*G06T 5/60* (2024.01)  *G06T 5/77* (2024.01)

(52) Cooperative Patent Classification (CPC):
**G06N 3/08; G06T 5/30; G06T 5/50; G06T 5/60; G06T 5/77;** G06T 2207/10016; G06T 2207/20081; G06T 2207/20084; Y02T 10/40

(86) International application number:
**PCT/CN2023/105718**

(87) International publication number:
**WO 2024/041235 (29.02.2024 Gazette 2024/09)**

(54) **IMAGE PROCESSING METHOD AND APPARATUS, DEVICE, STORAGE MEDIUM AND PROGRAM PRODUCT**

BILDVERARBEITUNGSVERFAHREN UND -VORRICHTUNG, VORRICHTUNG, SPEICHERMEDIUM UND PROGRAMMPRODUKT

PROCÉDÉ ET APPAREIL DE TRAITEMENT D'IMAGE, DISPOSITIF, SUPPORT D'ENREGISTREMENT ET PRODUIT-PROGRAMME

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **26.08.2022 CN 202211029204**

(43) Date of publication of application:
**04.09.2024 Bulletin 2024/36**

(73) Proprietor: **Tencent Technology (Shenzhen) Company Limited**
**Shenzhen, Guangdong, 518057 (CN)**

(72) Inventors:
• **ZHONG, Ligeng**
  **Shenzhen, Guangdong 518057 (CN)**
• **ZHU, Yunquan**
  **Shenzhen, Guangdong 518057 (CN)**
• **LIU, Wenran**
  **Shenzhen, Guangdong 518057 (CN)**
• **WEN, Wei**
  **Shenzhen, Guangdong 518057 (CN)**

(74) Representative: **Novagraaf International SA**
**Chemin de l'Echo 3**
**1213 Onex, Geneva (CH)**

(56) References cited:
CN-A- 110 533 604    CN-A- 113 888 431
CN-A- 114 022 497    CN-A- 114 170 112
KR-B1- 102 230 361    US-A1- 2012 113 093

**Description**

RELATED APPLICATION

This application is based upon and claims priority to Chinese Patent Application No. 202211029204.9 filed on August 26, 2022.

FIELD OF THE TECHNOLOGY

This application relates to the field of image processing technologies, and in particular, to an image processing method and apparatus, a device, a storage medium, and a program product.

BACKGROUND OF THE DISCLOSURE

With development of science and technology, more and more application programs support video playback. A video played is processed. To ensure accuracy of video processing, a video padding technology is proposed, where video padding is to process a video frame image in a video.

Currently, the video padding technology includes: a mode based on an optical flow and a mode based on a neural network model.

When video frame image processing is performed based on an optical flow, optical flow estimation is performed by using an adjacent video frame image, and an optical flow is applied to propagate a pixel gradient of an unmasked region to a masked region, so as to pad the masked region with an optical flow, so as to complete padding of the video frame image. However, the mode based on an optical flow is only applicable to a case in which a background is moved simply, and is not applicable to a case in which an object is shielded and complex movement occurs in the background.

When video frame image processing is performed based on a neural network model, the neural network model is a single model. In a case in which complex movement occurs in a background, a reference pixel propagation effect is better, and padding processing is performed on the video frame image. However, a generation capability of the single model is limited. In a case in which a texture is complex and an object is shielded, padding content is blurred, and image quality of the video frame image cannot be ensured.

Patent publication US 2012/113093 A1 discloses an two-pass inpainting method wherein holes corresponding to low-frequency regions are filled in a first pass, and holes corresponding to high-frequency regions are filled in a second pass, so as to avoid introducing undesirable blurring.

Patent publication CN 110 533 604 A discloses an inpainting method in which a morphological closing operation is applied as a pre-processing on a mask before performing inpainting.

Therefore, how to ensure accuracy of image processing in a case in which an object is shielded and a texture is complex, and further improve image quality of a processed video frame image is a technical problem that currently needs to be solved.

SUMMARY

This application provides an image processing method and apparatus, a device, a storage medium, and a program product, so as to ensure accuracy of image processing and improve image quality of a processed video frame image.

According to a first aspect, an embodiment of this application provides an image processing method, including:

performing mask processing on a first-type object included in an obtained target video frame image, to obtain a to-be-processed image after mask processing; the first-type object being a to-be-inpainted image element;

performing inpainting processing on the first-type object in the to-be-processed image to obtain a first inpainted image, and generating a corresponding image initial mask template based on an initial blurred region in the first inpainted image;

performing, when a first quantity of initial blurred pixels included in the image initial mask template reaches a first threshold, morphological processing on an initial blurred region corresponding to the initial blurred pixel to obtain an image target mask template;

performing, when a second quantity of intermediate blurred pixels included in the image target mask template reaches a second threshold, inpainting processing on a pixel region corresponding to the intermediate blurred pixel in the first inpainted image, to obtain a second inpainted image; and

determining a target inpainted image corresponding to the to-be-processed image based on the second inpainted image.

According to a second aspect, an embodiment of this application provides an image processing apparatus, including:

a first processing unit, configured to perform mask processing on a first-type object included in an obtained target video frame image, to obtain a to-be-processed image after mask processing; the first-type object being a to-be-inpainted image element;

a second processing unit, configured to: perform inpainting processing on the first-type object in the to-be-processed image to obtain a first inpainted image, and generate a corresponding image initial mask template based on an initial blurred region in the first inpainted image;

a third processing unit, configured to: perform, when a first quantity of initial blurred pixels included in the image initial mask template reaches a first threshold, morphological processing on an initial blurred region corresponding to the initial blurred pixel to obtain an image target mask template;

a fourth processing unit, configured to: perform, when a second quantity of intermediate blurred pixels included in the image target mask template reaches a second threshold, inpainting processing on a pixel region corresponding to the intermediate blurred pixel in the first inpainted image, to obtain a second inpainted image; and

a determining unit, configured to determine a target inpainted image corresponding to the to-be-processed image based on the second inpainted image.

According to a third aspect, an embodiment of this application provides an electronic device, including: a memory and a processor, where the memory is configured to store computer instructions; and the processor is configured to execute the computer instructions to implement the operations of the image processing method provided in the embodiments of this application.

According to a fourth aspect, an embodiment of this application provides a computer-readable storage medium, having computer instructions stored therein, the computer instructions, when executed by a processor, implementing the operations of the image processing method provided in the embodiments of this application.

According to a fifth aspect, an embodiment of this application provides a computer program product, where the computer program product includes computer instructions, and the computer instructions are stored in a computer-readable storage medium. When a processor of an electronic device reads the computer instructions from the computer-readable storage medium, the processor executes the computer instructions, so that the electronic device performs the operations of the image processing method provided in the embodiments of this application.

Beneficial effects of the embodiments of this application are as follows:
In the embodiments of this application, image inpainting is decomposed into three phases, an obtained first inpainted image is further detected in the first phase, and a corresponding image initial mask template is generated. In the second phase, when it is determined that a first quantity of initial blurred pixels included in the image initial mask template reaches a first threshold, morphological processing is performed on a blurred region corresponding to the initial blurred pixel to connect different blurred regions, so as to obtain an image target mask template, thereby avoiding unnecessary processing on a smaller blurred region, and improving processing efficiency. In the third phase, when it is determined that a second quantity of intermediate blurred pixels included in the image target mask template reaches a second threshold, it is determined that an object contour that needs to be complemented exists in the first inpainted image, so as to perform inpainting processing on a pixel region corresponding to the intermediate blurred pixel, to obtain a second inpainted image. Finally, a target inpainted image corresponding to a to-be-processed image is determined based on the second inpainted image. Through cooperation of the foregoing three phases, image quality of the second inpainted image is improved, and image quality of the target inpainted image is ensured.

BRIEF DESCRIPTION OF THE DRAWINGS

To describe the technical solutions of the embodiments of this application more clearly, the following briefly introduces the accompanying drawings required for describing the embodiments. Clearly, the accompanying drawings in the following description show only some embodiments of this application, and a person of ordinary skill in the art may still derive other drawings from these accompanying drawings without creative efforts.

FIG. 1 is a schematic diagram of first image processing in a related art.

FIG. 2 is a schematic diagram of second image processing in a related art.

FIG. 3 is a schematic diagram of an application scenario according to an embodiment of this application.

FIG. 4 is a flowchart of an image processing method according to an embodiment of this application.

FIG. 5 is a schematic diagram of performing padding processing on a first-type object according to an embodiment of this application.

FIG. 6 is a schematic diagram of first image processing according to an embodiment of this application.

FIG. 7 is a schematic diagram of second image processing according to an embodiment of this application.

FIG. 8 is a schematic diagram of third image processing according to an embodiment of this application.

FIG. 9 is a schematic diagram of performing morphological processing on an initial blurred region according to an embodiment of this application.

FIG. 10 is a schematic diagram of performing inpainting processing on a pixel region corresponding to an intermediate blurred pixel according to an embodiment of this application.

FIG. 11 is a flowchart of another image processing method according to an embodiment of this application.

FIG. 12 is a flowchart of a specific implementation method for image processing according to an embodiment of this application.

FIG. 13 is a schematic diagram of a specific implementation method for image processing according to an embodiment of this application.

FIG. 14 is a flowchart of a training method for an information propagation model according to an embodiment of this application.

FIG. 15 is a structural diagram of an image processing apparatus according to an embodiment of this application.

FIG. 16 is a structural diagram of an electronic device according to an embodiment of this application.

FIG. 17 is a structural diagram of another electronic device according to an embodiment of this application.

## DESCRIPTION OF EMBODIMENTS

In order to make objectives, technical solutions, and beneficial effects of this application clearer, the technical solutions in the embodiments of this application will be clearly and completely described in the following with reference to the accompanying drawings in the embodiments of this application. It is clear that the embodiments to be described are only a part rather than all of the embodiments of this application.

To facilitate a person skilled in the art to better understand the technical solutions of this application, the following describes some concepts involved in this application.

Video inpainting is a technology in which unshielded region information in a video is configured for inpainting a shielded region, that is, the unshielded region information is configured for properly inpainting the shielded region. Video inpainting requires two capabilities: One is a capability of using time domain information to propagate available pixels of a frame to a corresponding region of another frame; and the other is a generation capability. If no available pixels exist in another frame, pixel generation needs to be performed on a corresponding region by using space and time domain information.

A visual identity system (VIS) is configured to pre-identify a mask template corresponding to an object in an image.

Mask template: The whole or a part of a to-be-processed image is shielded by using a selected image, graph, or object, to control a region or a processing process of image processing. A specific image or object configured for coverage is referred to as a mask template. In optical image processing, the mask template may refer to a film, a filter, or the like. In digital image processing, a mask template is a two-dimensional matrix array, and sometimes may be a multi-valued image. In digital image processing, an image mask template is mainly configured to: 1. Extract a region of interest, and multiply a mask template of the region of interest by a to-be-processed image to obtain an image of the region of interest, where an image value in the region of interest remains unchanged, and image values outside the region are all 0. 2. Shielding function: Shield certain regions on an image by using the mask template, so that the regions do not participate in processing or calculation of processing parameters, or only process or count the shielded regions. 3. Extract a structure feature, and detect and extract a structure feature that is in an image and that is similar to a mask by using a similarity variable or an image matching method. 4. Make a special-shape image. In the embodiments of this application, the mask template is mainly configured for extracting a region of interest. The mask template may be a two-dimensional matrix array. A row quantity of the two-dimensional matrix array is consistent with a height of the to-be-processed image (that is, a row quantity of the to-be-processed image), and a column quantity is consistent with a width of the to-be-processed image (that is, a column quantity of pixels), that is, each element in the two-dimensional matrix array is configured for processing a pixel at a corresponding position in the to-be-processed image. In the mask template, a value of an element at a position corresponding to a to-be-processed region (for example, a blurred region) of the to-be-processed image is 1, a value at another position is 0, and after the mask template of the region of interest is multiplied by the to-be-processed image, if a value at a certain position in the two-dimensional matrix array is 1, a value of a pixel at the position in the to-be-processed image remains unchanged; or if a value at a certain position in the two-dimensional matrix array is 1, a value of a pixel at the position in the to-be-processed image remains unchanged, so that the region of interest can be extracted from the to-be-processed image.

Morphological processing: is configured for extracting, from an image, image components that are significant for expressing and describing a shape of a region, so that subsequent identification can grasp the most essential shape features of a target object. Morphological processing includes but is not limited to: dilation and erosion, open operation and closed operation, morphology of a grayscale image.

The term "for example" as used below means "used as an example, embodiment or illustrative". Any embodiment illustrated as "for example" is not to be construed as superior or better than other embodiments.

The terms such as "first" and "second" are used only for the purpose of description, and are not to be understood as indicating or implying the relative importance or implicitly specifying the quantity of the indicated technical features. Therefore, features defined by "first" and "second" may explicitly or implicitly include one or more features. In the description of the embodiments of this application, unless otherwise noted, "a plurality of" means two or more.

The following briefly describes a design idea of the embodiments of this application.

With development of science and technology, more and more application programs support video playback. A video played is processed. To ensure accuracy of video processing, a video inpainting technology is proposed, where video inpainting is to process a video frame image in a video.

Currently, the video inpainting technology includes: a mode based on an optical flow and a mode based on a neural network model.

The mode based on an optical flow includes the following operations: Operation 1: Perform optical flow estimation by using a neighbor frame. Operation 2: Perform optical flow padding on a masked region. Operation 3: Apply an optical flow to propagate a pixel gradient of an unmasked region to the masked region. Operation 4: Perform Poisson reconstruction on the pixel gradient to generate an RGB pixel. Operation 5: If an image inpainting module is included, perform image inpainting on a region in which an optical flow cannot be padded.

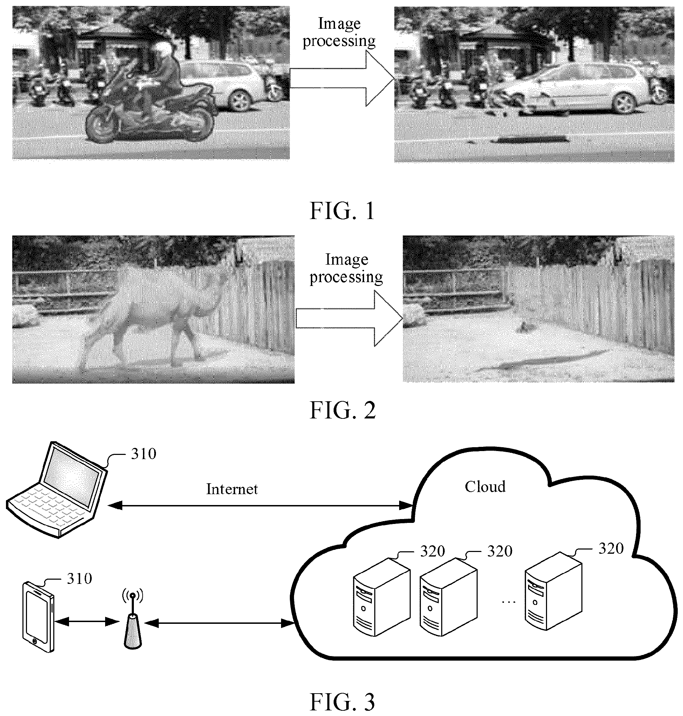

However, in a case in which a background is moved simply, an optical flow-based video inpainting method has a better inpainting effect, an image obtained after the inpainting is not blurred, and an inpainting trace is difficult to detect if a better optical flow estimation module is used. However, when a background is moved in a complex manner or an object is shielded, the inpainting effect of the optical flow-based video inpainting method is greatly affected, and an error pixel caused by an error of optical flow estimation gradually expands with propagation of the error pixel, thereby causing a content inpainting error. Referring to FIG. 1, FIG. 1 is a schematic diagram of first image processing in a related art.

In a mode based on a neural network model, a network structure is mostly an encoder-decoder structure. Both inter-frame consistency and naturality of a generated pixel need to be considered. Frame sequence information is received as an input, and an inpainted frame is directly outputted after network processing.

In a related technology, an algorithm based on a neural network model can implement inpainting with a better reference pixel propagation effect, and inpainting effect in a case of complex background movement. However, a current neural network model is a single model, and a generation capability of the single model is limited. For a case in which a texture is complex and an object is shielded, an inpainting effect may be more blurred. Limited to a video memory or the like, it is difficult to process a high-resolution input. Thus, in the case of complex textures and object shielding, inpainting content is blurred. Referring to FIG. 2, FIG. 2 is a schematic diagram of second image processing in a related art.

It can be learned that an image processing mode in a related technology is limited by optical flow quality and model generation quality. Currently, a very robust effect cannot be implemented by using any one of the methods. Therefore, how to ensure accuracy of image processing in a case of object shielding and complex textures, and improve image quality of a processed video frame image is a technical problem that needs to be solved currently.

In view of this, embodiments of this application provide an image processing method and apparatus, a device, a storage medium, and a program product, so as to ensure accuracy of image processing and improve image quality of a processed video frame.

In the image processing method provided in the embodiments of this application, three types of video inpainting are completed by using a neural network model. They are respectively as follows:

1. When there is a case in which complex movement occurs in a background in a video, a video frame image is inpainted based on an inter-frame pixel propagation model. In this case, a first-type object may be a foreground region in a video frame.

2. When a texture of a video frame image in a video is complex, a blurred region in the video frame image is inpainted based on an image inpainting model. In this case, the first-type object may be the blurred region in the video frame. For a detection manner of the blurred region, refer to the following description.

3. For a case in which an object is shielded in a video frame image, an object region (that is, a background region shielded by a foreground object) in the video frame image is inpainted based on an object inpainting model.

In the embodiments of this application, when it is determined that another element needs to be configured for inpainting a first-type object in a video frame image, that is, when another element is configured for inpainting a to-be-inpainted image element in the video frame image, first, mask processing is performed on a first-type object included in an obtained target video frame image to obtain a to-be-processed image after mask processing. In addition, to ensure that a second-type object that needs to be reserved in a processing process is not affected, the second-type object included in the video image is further identified to determine a corresponding object initial mask template. Then, the to-be-processed image and the object initial mask template are inputted into a trained information propagation model, and inpainting processing is performed on the first-type object in the to-be-processed image by using the information propagation model to obtain a first inpainted image. In this case, inpainting is completed for a to-be-inpainted image element, an initial blurred region in the first inpainted image (the initial blurred region is a blurred region that still exists in the obtained first inpainted image after the to-be-processed image is inpainted) is detected, a corresponding image initial mask template is generated based on the initial blurred region, and an object target mask template in the to-be-processed image is determined.

To ensure accuracy of image processing in an image inpainting process, after the first inpainted image is obtained, in the embodiments of this application, the initial blurred region in the first inpainted image is further detected, and a corresponding image initial mask template is generated. When it is determined that a first quantity of initial blurred pixels included in the image initial mask template reaches a first threshold, morphological processing is performed on an initial blurred region corresponding to the initial blurred pixel, to obtain an image target mask template, so that the blurred region is more regular. Then, a second quantity of intermediate blurred pixels included in the image target mask template is determined. When the second quantity reaches a second threshold, in the first inpainted image, inpainting processing is performed on a pixel region corresponding to the intermediate blurred pixel by using an image inpainting model to obtain a second inpainted image, and inpainting processing is performed on the blurred region in the first inpainted image, that is, the blurred region in the first inpainted image is enhanced. Finally, when it is determined that the contour of the second-type object in the object initial mask template is inconsistent with the contour of the second-type object in the object target mask template, in the second inpainted image, inpainting processing is performed on a pixel region corresponding to the second-type object in the second inpainted image by using an object inpainting model to obtain a third inpainted image, so that inpainting processing is performed on a shielded object region, that is, the blurred region in the second inpainted image is enhanced.

The initial blurred pixel refers to a pixel in the image initial mask template, and the intermediate blurred pixel refers to a pixel in the image target mask template.

In the embodiments of this application, inpainting processing is performed on a blurred region with blurred inpainting caused by a complex texture and an object shielding condition, and enhancement processing is performed on the blurred region, thereby improving image quality of a target inpainted image.

In the embodiments of this application, an information propagation model, an image inpainting model, and a part of an object inpainting model relate to artificial intelligence (AI) and a machine learning technology, and are designed based on a voice technology, a natural language processing technology, and machine learning (ML) in AI.

AI involves a theory, a method, a technology, and an application system that use a digital computer or a machine controlled by the digital computer to simulate, extend, and expand human intelligence, perceive an environment, obtain knowledge, and use knowledge to obtain an optimal result. In other words, AI is a comprehensive technology in computer science and attempts to understand the essence of intelligence and produce a new intelligent machine that can react in a manner similar to human intelligence.

AI is to study the design principles and implementation methods of various intelligent machines, to enable the machines to have the functions of perception, reasoning, and decision-making. AI technologies mainly include several major directions such as a computer vision technology, a nature language processing technology, and machine learning/deep learning. With research and progress of AI technologies, AI is studied and applied in a plurality of fields, such as common smart home, intelligent customer service, virtual assistant, intelligent sound boxes, intelligent marketing, unmanned driving, autonomous driving, robots, and intelligent medical treatment. It is believed that with development of technologies, AI will be applied in more fields and play an increasingly important role.

Machine learning (ML) is a multi-field interdiscipline, and relates to a plurality of disciplines such as the probability theory, statistics, the approximation theory, convex analysis, and the algorithm complexity theory. ML specializes in studying how a computer simulates or implements a human learning behavior to obtain new knowledge or skills, and reorganize an existing knowledge structure, so as to keep improving its performance. In contrast to data mining, which looks for mutual characteristics among big data, machine learning focuses more on the design of algorithms that allow computers to automatically "learn" patterns from data and use them to make predictions about unknown data.

ML is the core of AI, is a basic way to make the computer intelligent, and is applied to various fields of AI. ML and deep learning generally include technologies such as an artificial neural network, a belief network, reinforcement learning, transfer learning, and inductive learning. Reinforcement learning (RL), also referred to as evaluation learning, is one of paradigms and methodologies of machine learning for describing and solving a problem that agents maximize rewards or achieve a specific goal by learning strategies during their interaction with the environment.

The following describes preferred embodiments of this application with reference to the accompanying drawings of this specification. The preferred embodiments described herein are merely configured for describing and explaining this application, and are not configured for limiting this application. In addition, in a case of no conflict, features in the embodiments and the embodiments of this application may be mutually combined.

Referring to FIG. 3, FIG. 3 is a schematic diagram of an application scenario according to an embodiment of this application. The application scenario includes a terminal device 310 and a server 320. The terminal device 310 and the server 320 may communicate with each other by using a communication network.

In an optional implementation, the communication network may be a wired network or a wireless network. Therefore, the terminal device 310 and the server 320 may be directly or indirectly connected in a wired or wireless communication manner. For example, the terminal device 310 may be indirectly connected to the server 320 by using a wireless access point, or the terminal device 310 is directly connected to the server 320 by using the Internet, which is not limited in this application.

In this embodiment of this application, the terminal device 310 includes but is not limited to a device such as a mobile phone, a tablet computer, a notebook computer, a desktop computer, an e-book reader, an intelligent voice interaction device, a smart home appliance, and an in-vehicle terminal. Various clients may be installed on the terminal device. The client may be an application program (such as a browser or game software) that supports functions such as video editing and video playback, or may be a web page or a mini program.

The server 320 is a background server corresponding to a client installed in the terminal device 310. The server 320 may be an independent physical server, or may be a server cluster or a distributed system formed by multiple physical servers, or may be a cloud server that provides basic cloud computing service such as a cloud service, a cloud database, cloud computing, a cloud function, cloud storage, a network service, cloud communication, a middleware service, a domain name service, a security service, a content delivery network (CDN), big data, and an artificial intelligence platform.

The image processing method in this embodiment of this application may be performed by an electronic device. The electronic device may be the server 320 or the terminal device 310. That is, the method may be independently performed by the server 320 or the terminal device 310, or may be jointly performed by the server 320 and the terminal device 310.

When the method is independently performed by the terminal device 310, for example, the terminal device 310 may obtain a to-be-processed image after mask processing, perform inpainting processing on the to-be-processed image to obtain a first inpainted image, determine an image initial mask template corresponding to the first inpainted image, process the image initial mask template when a first quantity of initial blurred pixels included in the image initial mask template reaches a first threshold, obtain an image target mask template, and continue inpainting processing on a blurred position in the first inpainted image when a second quantity of intermediate blurred pixels included in the image target mask template reaches a second threshold, to obtain a second inpainted image, and finally determine a target inpainted image corresponding to the to-be-processed image based on the second inpainted image.

When the method is independently performed by the server 320, for example, the terminal device 310 may obtain a video frame image, and then send the video frame image to the server 320. The server 320 performs mask processing on a first-type object included in the obtained video frame image, to obtain a to-be-processed image after mask processing, performs inpainting processing on the to-be-processed image, to obtain a first inpainted image, determines an image initial mask template corresponding to the first inpainted image, when a first quantity of initial blurred pixels included in the image initial mask template reaches a first threshold, processes the image initial mask template to obtain an image target mask template, when a second quantity of intermediate blurred pixels in the image target mask template reaches a second threshold, continues to perform inpainting processing on a blurred position in the first inpainted image to obtain a second inpainted image, and finally determines a target inpainted image corresponding to the to-be-processed image based on the second inpainted image.

When the method is jointly performed by the server 320 and the terminal device 310, for example, the terminal device 310 may obtain a to-be-processed image, perform inpainting processing on the to-be-processed image to obtain a first inpainted image, and then send the first inpainted image to the server 320. The server 320 determines an image initial mask template corresponding to the first inpainted image, when a first quantity of initial blurred pixels included in the image initial mask template reaches a first threshold, processes the image initial mask template to obtain an image target mask template, when a second quantity of intermediate blurred pixels included in the image target mask template reaches a second threshold, continues to perform inpainting processing on a blurred position in the first inpainted image to obtain a second inpainted image, and finally determines a target inpainted image corresponding to the to-be-processed image based on the second inpainted image.

In the following, an example in which the server independently performs the method is mainly configured for description. This is not specifically limited herein.

During specific implementation, a video frame image may be inputted into the terminal device 310. The terminal device 310 sends a to-be-processed video frame image to the server 320. The server 320 may determine a target inpainted image corresponding to the to-be-processed image by using the image processing method in this embodiment of this application.

FIG. 3 shows only an example for description. Actually, a quantity of terminal devices 310 and a quantity of servers 320 are not limited, and are not specifically limited in this embodiment of this application.

In this embodiment of this application, when there are a plurality of servers 320, the plurality of servers 320 may form a blockchain, and the servers 320 are nodes on the blockchain. According to the image processing method disclosed in this embodiment of this application, an inpainting processing mode and a morphology processing mode involved may be stored in the blockchain.

The following describes, with reference to the foregoing described application scenario, the image processing method provided in the exemplary implementation of this application according to the accompanying drawings. The foregoing application scenario is merely shown for ease of understanding the principle of this application, and the implementation of this application is not limited in this aspect.

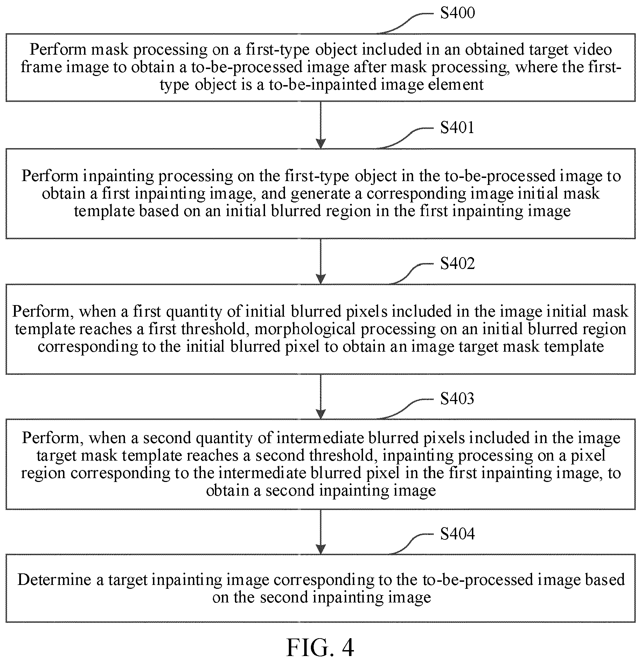

Referring to FIG. 4, FIG. 4 is a flowchart of an image processing method according to an embodiment of this application, and the method includes the following operations:

Operation S400: Perform mask processing on a first-type object included in an obtained target video frame image (i.e., an input video frame image), to obtain a to-be-processed image after mask processing; the first-type object being an image element for inpainting.

During video inpainting processing, a video sequence $x = \{x_t\}(t = 0,1,2, ..., T)$ on which video inpainting needs to be performed and a corresponding mask template sequence $m = \{mt\}(t = 0,1,2, ..., T)$ are first obtained, where $x_t$ indicates a video frame image on which video inpainting needs to be performed, that is, a video frame image before processing, and $m_t$ indicates a mask template corresponding to the video frame image. The mask template is configured for indicating an image element for inpainting, that is, a mask region corresponding to the first-type object may be determined by using the mask template. In an example, the image element for inpainting may be an erroneous image element, which needs to be inpainted so as to correct the corresponding image error.

Then, mask processing is performed on the corresponding video frame image based on the mask region in the mask template, to obtain a to-be-processed image $x_{mt}$ after mask processing. Mask processing is $x_{mt} = x_t \cdot (1 - m_t)$, where the mask template $m_t$ is generally a binary matrix, and "·" is multiplication element by element. Therefore, the to-be-processed image includes an inpainting region that is determined based on the mask region and that requires video inpainting. The mask region is an inpainting region.

Image processing mainly includes performing inpainting processing on the inpainting region of the to-be-processed image, that is, performing inpainting processing on the mask region in the video frame image $x_t$ to obtain a processed video sequence $y = \{y_t\}(t = 0,1,2, ..., T)$, where $y_t$ indicates the video frame image after inpainting processing.

To ensure that only image content in the mask region is different in the video frame image $y_t$ obtained after inpainting processing compared with the video frame image $x_t$ before inpainting processing, image content in another region is natural and consistent in time and space. In this embodiment of this application, first, inpainting processing is performed on an inpainting region in a to-be-processed image to obtain a first inpainted image. Then, detection is performed on the first inpainted image, so as to determine whether image content of another region in the first inpainted image is the same as image content of a video frame image before inpainting processing or a to-be-processed image before inpainting processing, and determine whether a first padding image needs to be further padded, so as to obtain a target padding image whose image content in another region is the same as that of the video frame image before inpainting processing or the to-be-processed image before inpainting processing except the inpainting region.

Operation S401: Perform inpainting processing on the first-type object in the to-be-processed image to obtain a first inpainted image, and generate a corresponding image initial mask template based on an initial blurred region in the first inpainted image.

The generating a corresponding image initial mask template based on an initial blurred region in the first inpainted image includes: generating the image initial mask template that includes the initial blurred region (the first blurred region). That is, the image initial mask template is a mask template of the initial blurred region. The image initial template may be a two-dimensional matrix array, a row quantity of the two-dimensional matrix array is consistent with a height of the first inpainted image (that is, a row quantity of the first inpainted image), a column quantity is consistent with a width of the first inpainted image (that is, a column quantity of pixels of the first inpainted image), and each element in the two-dimensional matrix array is configured for processing a pixel at a corresponding position in the first inpainted image. A value of an element that is in the image initial mask template and that is at a position corresponding to the initial blurred region of the to-be-processed image is 1, and a value of another position is 0. After the image initial mask template is multiplied by the first inpainted image, if a value of a position in the two-dimensional matrix array is 1, a value of a pixel in the position of the first inpainted image remains unchanged; or if a value of a position in the two-dimensional matrix array is 1, a value of a pixel in the position of the first inpainted image remains unchanged, so that the image initial mask template may be configured for extracting the initial blurred region from the first inpainted image.

In a possible implementation, first, a video sequence $x_m = \{x_{mt}\}(t = 0,1,2, ... , T)$ that includes the to-be-processed image is inputted to a trained information propagation model $F_T$. Then, inpainting processing is performed on the first-type object in the to-be-processed image by using the trained information propagation model $F_T$, to obtain the first inpainted image $x_{tcompt}$, and the corresponding image initial mask template $m_{blur}$ is generated based on the initial blurred region in the first inpainted image. Finally, the first inpainted image $x_{tcompt}$ and the image initial mask template $m_{blur}$ are outputted by using the trained information propagation model $F_T$, where the image initial mask template $m_{blur}$ indicates a region in the first inpainted image that has a poor inpainting effect, that is, a blurred region in the first inpainted image.

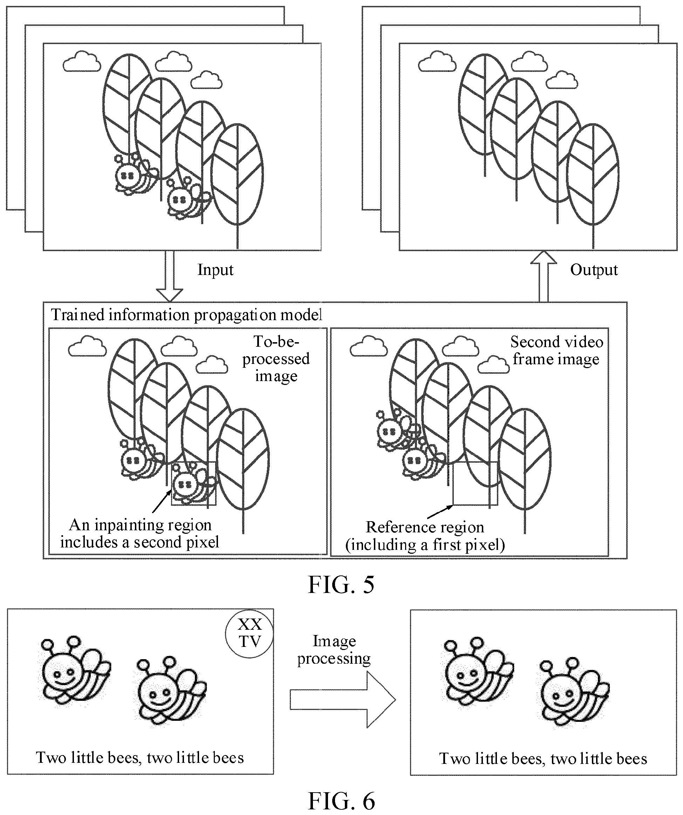

When padding processing is performed on the first-type object in the to-be-processed image by using the trained information propagation model $F_T$, first, a video sequence containing the to-be-processed image is inputted into the trained information propagation model $F_T$. Then, in the trained information propagation model $F_T$, inpainting processing is performed on the first-type object in the to-be-processed image based on pixels in another video frame image included in the video sequence by referring to time domain information and space domain information. Specifically, in adjacent two or more video frame images that include the to-be-processed image, a first pixel in another video frame image is configured for padding a second pixel in the to-be-processed image, where a position of the first pixel in the another video frame is the same as a position of the second pixel in the to-be-processed image in the video frame image. Referring to FIG. 5, FIG. 5 is a schematic diagram of performing padding processing on a first-type object according to an embodiment of this application.

The generating a corresponding image initial mask template $m_{blur}$ based on an initial blurred region in the first inpainted image may be implemented in the following manner:
First, the first inpainted image is divided into a plurality of pixel blocks according to a size of the first inpainted image. For example, the size of the first inpainted image is 7 cm*7 cm, and a size of each pixel block may be 0.7 cm*0.7 cm. A mode of dividing the first inpainted image into a plurality of pixel blocks is merely an example for description, and is not the only mode.

Then, a resolution of each pixel block is determined, a pixel block is determined based on the resolution of each pixel block in the first padding image, and the pixel block is used as an initial blurred region. Specifically, because a higher resolution leads to a clearer image and better image quality, in this embodiment of this application, image quality may be set to a resolution threshold. When a resolution of a pixel block is less than the resolution threshold, the pixel block is used as an initial blurred region.

Finally, mask processing is performed on the initial blurred region based on the initial blurred region to obtain a corresponding image initial mask template $m_{blur}$.

In this embodiment of this application, the first-type object includes but is not limited to: logo removal, subtitle removal, object removal, and the like. The object may be a moving person or object, or may be a still person or object.

For example, a video segment is created based on a video of a website of a platform. However, because a video obtained from the platform carries a logo, a sense of appearance is affected. In this case, a first-type object is a logo, and the logo may be removed from a video frame image of the video by using the image processing technology provided in this embodiment of this application. Referring to FIG. 6, FIG. 6 is a schematic diagram of image processing according to an embodiment of this application.

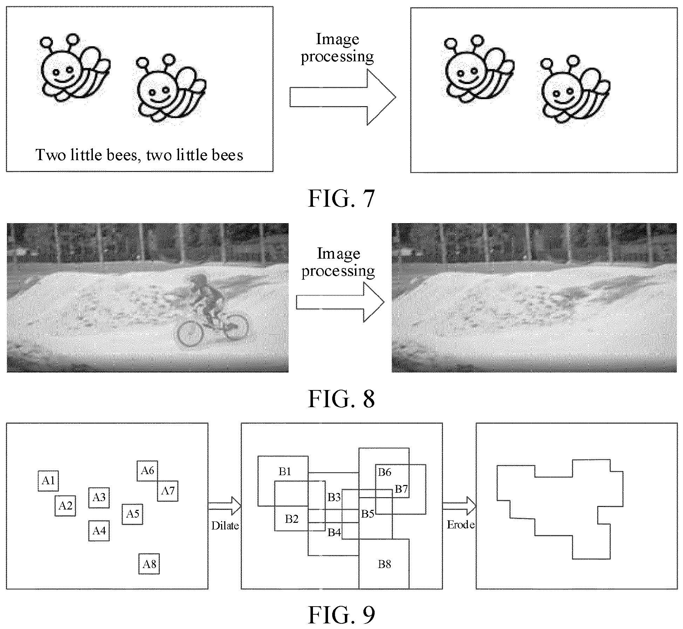

Similarly, a subtitle may be removed from a video frame image. Referring to FIG. 7, FIG. 7 is a schematic diagram of image processing according to an embodiment of this application. Alternatively, some moving objects, such as a passerby and a vehicle, are removed from a video frame image. Referring to FIG. 8, FIG. 8 is a schematic diagram of image processing according to an embodiment of this application.

Operation S402: Perform, when a first quantity of initial blurred pixels included in the image initial mask template reaches a first threshold, morphological processing on an initial blurred region defined by the initial blurred pixels to obtain an image target mask template.

The image initial mask template is determined based on a pixel block, and each pixel block has a resolution corresponding to the pixel block, where the resolution represents a quantity of pixels of the pixel block in a horizontal direction and a vertical direction. Therefore, based on the resolution of each pixel block, a quantity of pixels included in the pixel block is determined, and the first quantity of the initial blurred pixels included in the image initial mask template is obtained by adding quantities of pixels included in all the pixel blocks included in the image initial mask template.

Specifically, a quantity of pixels in a pixel block = a quantity of pixels in a horizontal direction * a quantity of pixels in a vertical direction.

In a possible implementation, when the first quantity of the initial blurred pixels included in the image initial mask template reaches the first threshold, there are a large quantity of pixel blocks in the first inpainted image.

However, when the pixel blocks in the first inpainted image are relatively scattered, that is, the initial blurred regions are not concentrated, even in a case in which there are a large quantity of pixel blocks in the first inpainted image, a blurred region with a blurred image cannot be clearly displayed in the first inpainted image. In this case, it is determined that an inpainting effect of the first inpainted image is up to standard, and no inpainting processing needs to be performed on the first inpainted image, thereby reducing a calculation amount.

Therefore, to ensure accuracy of image inpainting and reduce a calculation amount, it is necessary to verify the first inpainted image to determine whether the inpainting effect of the first inpainted image is up to standard. On this basis, in this embodiment of this application, in the image initial mask template, morphological processing is performed on the initial blurred region corresponding to the initial blurred pixel to obtain an image target mask template corresponding to the region obtained after morphological processing, so that the initial blurred regions in the first inpainted image are connected, and the blurred region is more regular.

In a possible implementation, in the image initial mask template, morphological processing is performed on the initial blurred region corresponding to the initial blurred pixel to obtain an image target mask template, which may be implemented in the following manner: performing, by using dilation $f_{dilate}$ operation and an erosion $f_{erode}$ operation, an operation of dilating a plurality of initial blurred regions $m_{blur}$ before etching, so that the plurality of scattered initial blurred regions are connected to form a connected region, and obtain an image target mask template corresponding to the connected region, where the image target mask template is $\tilde{m}_{blur} = f_{erode}(f_{dilate}(m_{blur}))$.

Referring to FIG. 9, FIG. 9 is a schematic diagram of performing morphological processing on an initial blurred region according to an embodiment of this application. It is assumed that a first inpainted image includes a plurality of initial blurred regions, which are respectively A1 to A8. In this case, the initial blurred regions A1 to A8 are first dilated according to a set dilation ratio to obtain dilated initial blurred regions B1 to B8, for example, the initial blurred regions A1 to A8 are dilated by 10 times. Then, whether overlapping exists in the dilated initial blurred regions B1 to B8 is determined, and overlapping regions are combined to obtain at least one combined region. Finally, the combined region is etched according to a shrinkage ratio to obtain an intermediate blurred region, where the shrinkage ratio is determined based on the dilation ratio, and when the dilation ratio is 10, the shrinkage ratio is 1/10.

The principle of image erosion is as follows: It is assumed that a foreground object in an image is 1, and a background is 0. It is assumed that there is one foreground object in the original image, and a process of etching the original image by using a structural element is as follows: Pixels of the original image are traversed, then a pixel currently being traversed is aligned with a center point of the structural element, then a minimum value of all pixels in a region corresponding to the original image covered by the current structural element is taken, and the current pixel value is replaced with the minimum value. Because the minimum value of the binary image is 0, 0 is configured for replacement, that is, the image changes to a black background. Therefore, it can also be seen that, if what the current structure element covers is only the background, the original image is not changed because the whole of the background is 0, and if what the current structure element covers is foreground pixels, the original image is not changed because all of the foreground pixels are 1. Only when the structural element is located at the edge of the foreground object, two different pixel values 0 and 1 will appear in the region covered by the structural element. In this case, the current pixel will be replaced with 0 and a change occurs. Therefore, erosion appears to have the effect of reducing the foreground object by one circle. For some small connections in the foreground object, if sizes of structural elements are equal, these connections will be disconnected.

In this case, the scattered initial blurred regions are connected to generate an intermediate blurred region, and each intermediate blurred region is equal to or greater than the initial blurred region compared with the initial blurred region. When the intermediate blurred region is relatively large (for example, the width and height are greater than corresponding width and height thresholds), a blurred region with a blurred image can be clearly displayed in the first inpainted image. In this case, the inpainting effect of the first inpainted image is poor, and inpainting processing needs to be performed on the first inpainted image. Therefore, whether to perform inpainting processing on the first inpainted image is determined based on the image target mask template, and a calculation amount is reduced while an inpainting effect is ensured.

In another possible implementation, when the first quantity of the initial blurred pixels included in the image initial mask template is less than the first threshold, pixel blocks in the first inpainted image are reduced, and a blurred region with a blurred image cannot be clearly displayed in the first inpainted image. In this case, it is determined that the inpainting effect of the first inpainted image is better, and the first inpainted image is used as a target inpainted image corresponding to the to-be-processed image, so that no operation such as morphological processing needs to be performed on the blurred region corresponding to the initial blurred pixel, and no operation such as continuing processing needs to be performed on the first inpainted image, thereby reducing a calculation procedure and improving image processing efficiency.

Operation S403: Perform, when a second quantity of intermediate blurred pixels included in the image target mask template reaches a second threshold, inpainting processing on a pixel region corresponding to the intermediate blurred pixel in the first inpainted image, to obtain a second inpainted image.

Because the scattered initial blurred regions are connected in the image target mask template, when the second quantity of the intermediate blurred pixels included in the image target mask template reaches the second threshold, a blurred region with a blurred image can be clearly displayed in the first inpainted image, and the inpainting effect of the first inpainted image is not good. In this case, to ensure accuracy of image processing, the pixel region (the second blurred region) corresponding to the intermediate blurred pixel in the first inpainted image needs to be inpainted.

In a possible implementation, in the first inpainted image, inpainting processing is performed on the pixel region corresponding to the intermediate blurred pixel, which may be implemented in the following manner:

First, the first inpainted image and the image target mask template are inputted into a trained image inpainting model $F_I$.

Then, in the trained image inpainting model $F_I$, in the first inpainted image $x_{tcomp}$, inpainting processing is performed on the pixel region corresponding to the intermediate blurred pixel based on the image target mask template $\tilde{m}_{blur}$ to obtain a second inpainted image. An inpainting processing process of the trained image inpainting model is denoted as follows:

$$x_{blurcomp} = F_I\big(x_{tcomp}, \tilde{m}_{blur}\big)$$

$x_{blurcomp}$ indicates the second inpainted image.

The pixel region is determined in the following manner: determining a region at the same position in the first inpainted image as the pixel region according to the position of the intermediate blurred pixel in the target mask template. The pixel region corresponding to then intermediate blurred pixel is generally a reference-free region or a moving-object region.

In this embodiment of this application, the trained image inpainting model $F_I$ may be an image generation tool configured for a blurred region, such as a latent diffusion model (LDM) or large mask inpainting (LaMa).

The LDM model is a high-resolution image synthesis training tool. In image inpainting and various tasks (for example, unconditional image generation, semantic scene synthesis, and super-resolution), high contention performance is achieved.

The LaMa model is an image generation tool, and can be well generalized to a higher resolution image.

The following describes, by using the LaMa model as an example, inpainting processing on the pixel region corresponding to the intermediate blurred pixel in the first inpainted image.

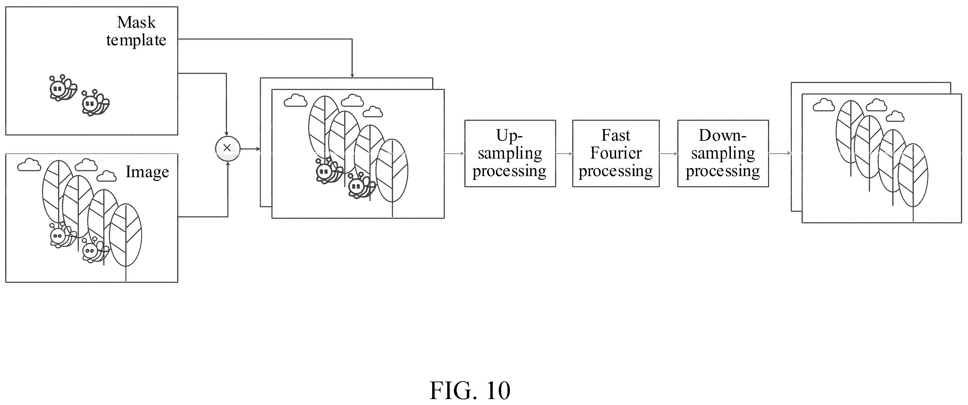

In the first inpainted image, by using the LaMa model, inpainting processing is performed on the pixel region corresponding to the intermediate blurred pixel, which may be implemented in the following manner: First, the first inpainted image with three channels and the image target mask template with one channel are inputted into the LaMa model. Second, in the LaMa model, the image target mask template is negated, and is multiplied by the first inpainted image to obtain a first color image with a mask region. Then, the first color picture and the image template mask template are superposed to obtain a 4-channel image. Then, after a down-sampling operation is performed on the 4-channel image, fast Fourier convolution (FFC) processing is performed, and up-sampling processing is performed on the image obtained after FFC processing to obtain the second inpainted image. In the FFC processing process, the inputted image is divided into two parts based on channels, and the two parts pass through two different branches. One branch is responsible for extracting local information, referred to as a local branch. The other branch is responsible for extracting global information, referred to as a global branch. FFC is used in the global branch to extract a global feature. Finally, the local information and the global information are cross-fused, and then spliced based on channels to obtain a final second inpainted image. Referring to FIG. 10, FIG. 10 is a schematic diagram of performing inpainting processing on a pixel region corresponding to an intermediate blurred pixel according to an embodiment of this application.

In this embodiment of this application, FFC enables the LaMa model to obtain a receptive field of an entire image even at a shallow layer. FFC not only improves inpainting quality of the LaMa model, but also reduces a parameter quantity of the LaMa model. In addition, an offset in FFC enables better generalization of the LaMa model. A low resolution image may be configured for generating an inpainting result of a high resolution image. FFC can work in both the spatial domain and the frequency domain, and a context of the image can be understood without returning to the previous layer.

The first threshold and the second threshold may be the same or different. A manner of determining the second quantity of the intermediate blurred pixels is similar to a manner of determining the first quantity of the initial blurred pixels, and details are not described herein again.

In another possible implementation, when the second quantity of the intermediate blurred pixels included in the image target mask template is less than the second threshold, pixel blocks in the first inpainted image are reduced, a blurred region with a blurred image cannot be clearly displayed in the first inpainted image, and the inpainting effect of the first inpainted image is better. In this case, the first inpainted image is used as the target inpainted image corresponding to the to-be-processed image, and inpainting processing does not need to be performed on the blurred region in the first inpainted image, so as to reduce a calculation procedure and improve image processing efficiency.

Operation S404: Determine a target inpainted image corresponding to the to-be-processed image based on the second inpainted image.

In this embodiment of this application, inpainting processing is performed on the first-type object in the to-be-processed image to obtain the first inpainted image. After inpainting of a to-be-inpainted image element is completed, to ensure accuracy of image processing in an image inpainting process, the initial blurred region in the first inpainted image is further detected, and the corresponding image initial mask template is generated. When it is determined that the first quantity of the initial blurred pixels included in the image initial mask template reaches the first threshold, morphological processing is performed on the blurred region corresponding to the initial blurred pixel to obtain the image target mask template, so that scattered initial blurred regions are connected, and the blurred region is more regular. Then, when it is determined that the second quantity of the intermediate blurred pixels included in the image target mask template reaches the second threshold, in the first inpainted image, inpainting processing is performed on the pixel region corresponding to the intermediate blurred pixel to obtain the second inpainted image. Finally, the target inpainted image corresponding to the to-be-processed image is determined based on the second inpainted image. Performing inpainting processing on the blurred region in the first inpainted image is performing enhancement processing on the blurred region in the first inpainted image. In addition, enhancement processing is performed on the blurred region in the first inpainted image, so as to obtain the second inpainted image, thereby improving image quality of the second inpainted image, and further ensuring image quality of the target inpainted image.

In the foregoing operation S404, when the target inpainted image corresponding to the to-be-processed image is determined based on the second inpainted image, the second inpainted image may be used as the target inpainted image, or a third inpainted image obtained after inpainting processing is performed on the second inpainted image is used as the target inpainted image.

Specifically, whether the second inpainted image is used as the target inpainted image or the third padding image is used as the target inpainted image is determined based on whether a contour of a second-type object in the object initial mask template is consistent with a contour of a second-type object in an object target mask template.

The object target mask template is determined in the following manner:

First, an object initial mask template $m_{obj}$ is inputted into the trained information propagation model $F_T$. Then, in the trained information propagation model $F_T$, object contour complementation processing is performed on a second-type object in the object initial mask template based on an object complementation capability of the trained information propagation model $F_T$, to obtain an object target mask template $m_{objcomp}$. The object initial mask template is determined after the second-type object included in the video frame image is identified, and the second-type object is an image element that needs to be reserved.

In a possible implementation, the object initial mask template $m_{obj}$ corresponding to the second-type object in the video frame image is determined by using a visual identity system (VIS) $F_{VIS}$. A process of determining the object initial mask template $m_{obj}$ by using the visual identity model $F_{VIS}$ is as follows:

$$m_{obj} = F_{VIS}(x_m)$$

where, $x_m$ is a video frame image.

In another possible implementation, the object initial mask template $m_{obj}$ corresponding to the second-type object in the to-be-processed image is determined by using a visual identity model $F_{VIS}$.

The visual identity model is obtained by training an image on which a mask template exists.

In this embodiment of this application, the object initial mask template is first compared with the object target mask template to obtain a first comparison result, the first comparison result being configured for representing whether contours of the second-type objects are consistent. Then, based on the first comparison result, the second inpainted image is processed to obtain the target inpainted image.

When the object initial mask template and the object target mask template are compared, the object initial mask template and the object target mask template may be completely overlapped to determine whether the mask region of the second-type object in the object initial mask template completely overlaps the mask region of the second-type object in the target mask template. If the mask region of the second-type object in the object initial mask template completely overlaps the mask region of the second-type object in the target mask template, it is determined that the first comparison result is configured for representing that the contours of the second-type objects are consistent; otherwise, it is determined that the first comparison result is configured for representing that the contours of the second-type objects are inconsistent.

When the object initial mask template is compared with the object target mask template, a third pixel quantity of the mask regions of the second-type objects in the object initial mask template and a fourth pixel quantity of the mask regions of the second-type objects in the object target mask template are determined, and the first comparison result is determined based on a difference between the third pixel quantity and the fourth pixel quantity, where the difference between the third pixel quantity and the fourth pixel quantity represents a difference between the mask regions of the second-type objects in the object initial mask template and the object target mask template.

When the comparison result is determined based on the difference between the third pixel quantity and the fourth pixel quantity, if the difference between the third pixel quantity and the fourth pixel quantity is less than a threshold, it is determined that the first comparison result is configured for representing that the contours of the second-type objects are consistent; otherwise, it is determined that the first comparison result is configured for representing that the contours of the second-type objects are inconsistent.

In a possible implementation, when the first comparison result represents that the contours of the second-type objects are consistent, the second inpainted image is used as the target inpainted image.

In another possible implementation, when the first comparison result represents that the contours of the second-type objects are inconsistent, the second inpainted image is processed to obtain the target inpainted image, which may be implemented in the following manner:

First, the second inpainted image and the object target mask template are inputted into the trained object inpainting model $F_{obs}$.

Then, in the trained object inpainting model $F_{obj}$, in the second inpainted image $x_{blurcomp}$, inpainting processing is performed on the pixel region corresponding to the second-type object based on the object target mask template $m_{objcomp}$, to obtain a third inpainted image, and the third inpainted image is used as the target inpainted image. An inpainting processing process of the trained object inpainting model $F_{obj}$ is denoted as follows:

$$x_{objcomp} = F_{obj}(x_{objremain}, m_{obj})$$

where, $x_{objcomp}$ represents an inpainted third inpainted image, $x_{objremain}$ represents a visible pixel part of the to-be-processed image, and $x_{objremain} = x_{mt} \cdot m_{obj}$, that is, a color image including a mask region of a first-type object and a mask region of a second-type object.

In this embodiment of this application, the trained object inpainting model may use any model configured for image inpainting, for example, spatial-temporal transformations for video inpainting (STTN) configured for video inpainting. When inpainting processing is performed on the pixel region corresponding to the second-type object in the first inpainted image by using the object inpainting model, inpainting processing is performed on the pixel region corresponding to the second-type object by using a visible pixel part based on a self-attention feature of the transformations.

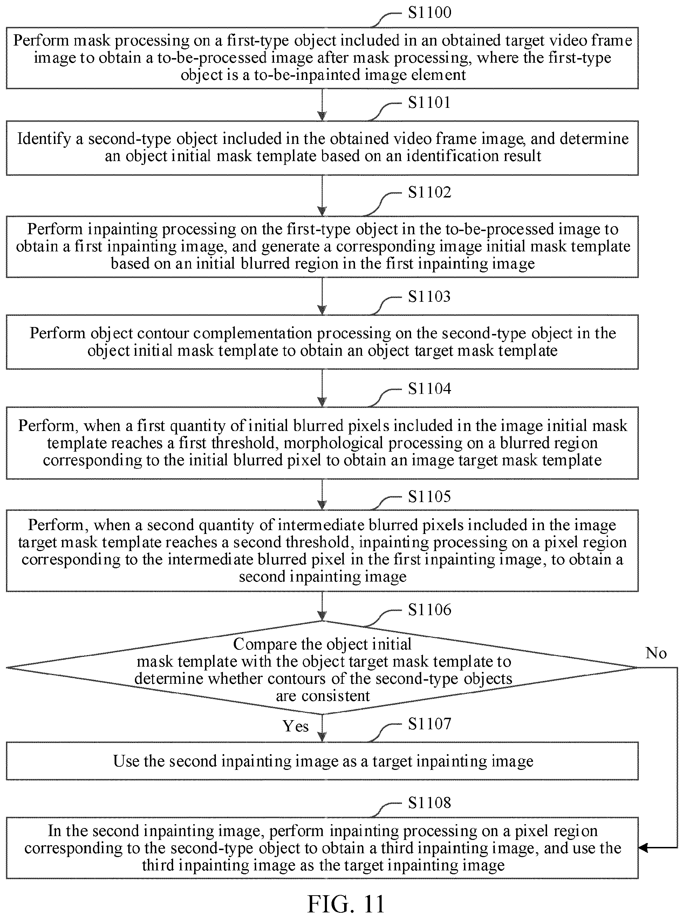

Referring to FIG. 11, FIG. 11 is a flowchart of another image processing method according to an embodiment of this application, and the method includes the following operations:

Operation S1100: Perform mask processing on a first-type object included in an obtained target video frame image, to obtain a to-be-processed image after mask processing; the first-type object being a to-be-inpainted image element.

Operation S1101: Identify a second-type object included in the obtained video frame image, and determine an object initial mask template based on an identification result.

Operation S1102: Perform inpainting processing on the first-type object in the to-be-processed image to obtain a first inpainted image, and generating a corresponding image initial mask template based on an initial blurred region in the first inpainted image.

Operation S1103: Perform object contour complementation processing on the second-type object in the object initial mask template to obtain an object target mask template.

Operation S1104: Perform, when a first quantity of initial blurred pixels included in the image initial mask template reaches a first threshold, morphological processing on a blurred region corresponding to the initial blurred pixel to obtain an image target mask template.

Operation S1105: Perform, when a second quantity of intermediate blurred pixels included in the image target mask template reaches a second threshold, inpainting processing on a pixel region corresponding to the intermediate blurred pixel in the first inpainted image, to obtain a second inpainted image.

Operation S1106: Compare the object initial mask template with the object target mask template to determine whether contours of the second-type objects are consistent, and if yes, perform operation S1107; otherwise, perform operation S1108.

Operation S1107: Use the second inpainted image as a target inpainted image.

Operation S1108: In the second inpainted image, perform inpainting processing on a pixel region corresponding to the second-type object to obtain a third inpainted image, and use the third inpainted image as the target inpainted image.

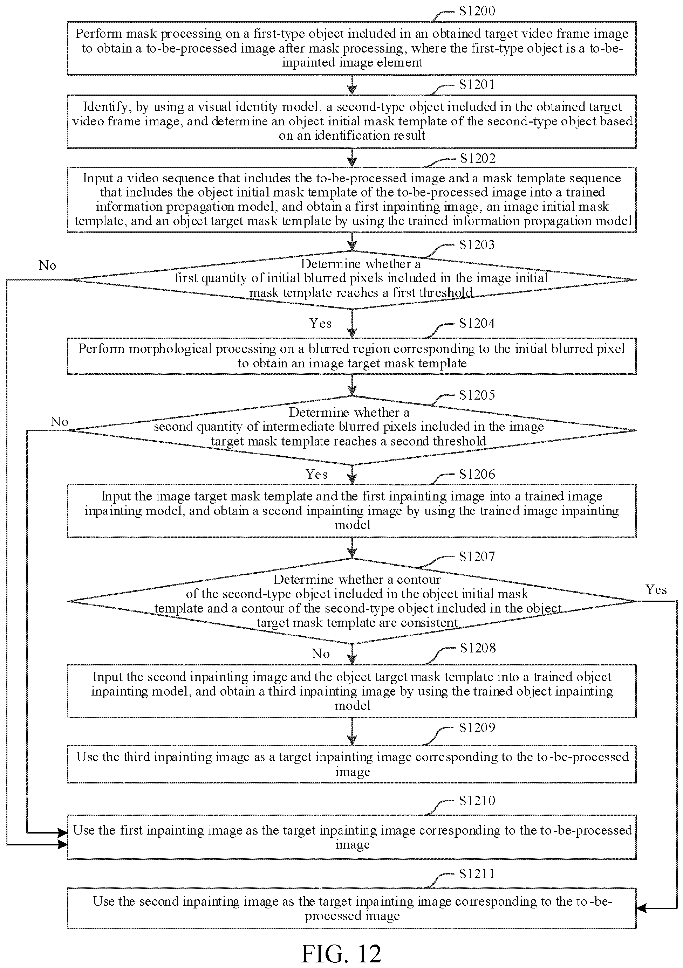

Referring to FIG. 12, FIG. 12 exemplarily provides a flowchart of a specific implementation method for image processing according to an embodiment of this application, including the following operations:

Operation S1200: Perform mask processing on a first-type object included in an obtained target video frame image to obtain a to-be-processed image after mask processing, where the first-type object is a to-be-inpainted image element.

Operation S1201: Identify, by using a visual identity model, a second-type object included in the obtained target video frame image, and determine an object initial mask template of the second-type object based on an identification result.

Operation S1202: Input a video sequence that includes the to-be-processed image and a mask template sequence that includes the object initial mask template of the to-be-processed image into a trained information propagation model, and obtain a first inpainted image, an image initial mask template, and an object target mask template by using the trained information propagation model.

That is, two input parameters corresponding to the trained information propagation model are respectively:

a first input parameter:

$$x_m = \{x_{mt}\}(t = 0,1,2, \dots, T), \text{ where } x_{mt} = x_t \cdot (1 - m_t);$$

the first input parameter is the video sequence that includes the to-be-processed image, and each frame of image in the video sequence may be a to-be-processed image $x_{mt}$;

a second input parameter:

$$m_{obj} = F_{VIS}(x_m), \text{ where } m_{obj} = \{m_{obj_1}, m_{obj_2}, \dots, m_{obj_T}\}(T = 0,1,2, \dots, T);$$

the second input parameter is the mask template sequence that includes the object initial mask template of the to-be-processed image, and each mask template in the mask template sequence may be an object initial mask template corresponding to a corresponding to-be-processed image. For example, $m_{obj_1}$ is the object initial mask template of $x_{m1}$.

The trained information propagation model is denoted as $F_T$, the first inpainted image for which inpainting is completed is denoted as $x_{tcomp}$, the object target mask template is denoted as $m_{obj_{comp}}$, and the image initial mask template is denoted as $m_{blur}$. In this case:

$$x_{tcomp}, m_{blur}, m_{obj_{comp}} = F_T(x_m, m_{obj}).$$

Operation S1203: Determine whether a first quantity of initial blurred pixels included in the image initial mask template reaches a first threshold, and if yes, perform operation S1204; otherwise, perform operation S1210.

Operation S1204: Perform morphological processing on a blurred region corresponding to the initial blurred pixel to obtain an image target mask template.

Operation S1205: Determine whether a second quantity of intermediate blurred pixels included in the image target mask template reaches a second threshold, and if yes, perform operation S1206; otherwise, perform operation S1210.

Operation S1206: Input the image target mask template and the first inpainted image into a trained image inpainting model, and obtain a second inpainted image by using the trained image inpainting model.

Operation S1207: Determine whether a contour of the second-type object included in the object initial mask template and a contour of the second-type object included in the object target mask template are consistent, and if yes, perform operation S1211; otherwise, perform operation S1208.

Operation S1208: Input the second inpainted image and the object target mask template into a trained object inpainting model, and obtain a third inpainted image by using the trained object inpainting model.

Operation S1209: Use the third inpainted image as a target inpainted image corresponding to the to-be-processed image.

Operation S1210: Use the first inpainted image as the target inpainted image corresponding to the to-be-processed image.

Operation S1211: Use the second inpainted image as the target inpainted image corresponding to the to-be-processed image.

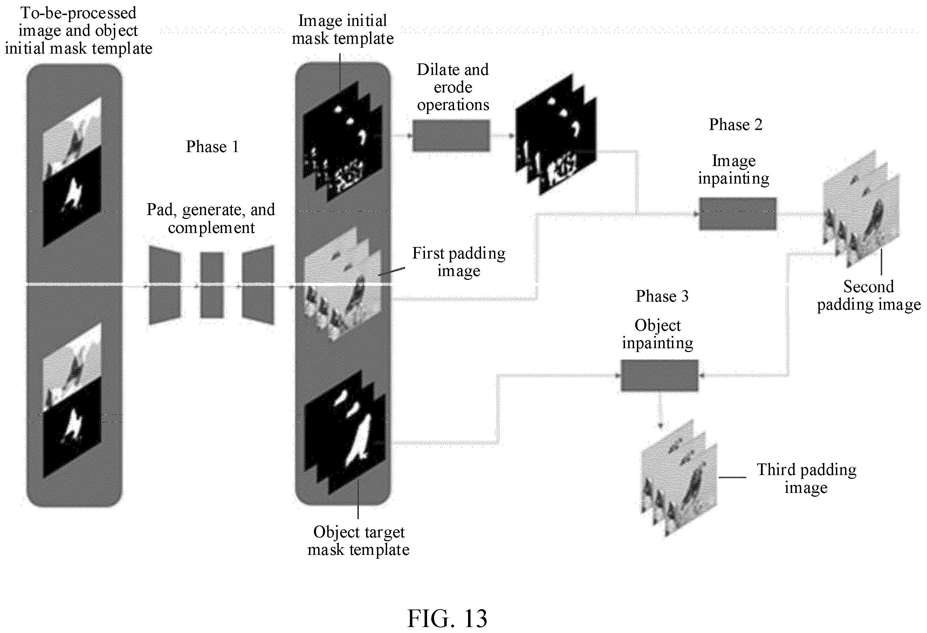

Referring to FIG. 13, FIG. 13 is corresponding to FIG. 12. FIG. 13 provides a schematic diagram of a specific implementation method for image processing according to an embodiment of this application.

It may be learned from FIG. 13 that an image processing process is divided into three phases according to a used model. The following describes the three phases in detail.

Phase 1: Input a to-be-processed image and an object initial mask template into a trained information propagation model; in the trained information propagation model, based on inter-frame reference information, use an available pixel of a corresponding region in another video frame image that is continuous with the to-be-processed image to perform inter-frame reference information inpainting on the to-be-processed image, where the trained information propagation model has a certain image generation capability at the same time, a pixel part that has no available pixel in another video frame image is generated by using the image generation capability, and pixel generation is performed by using information in space and time domain, so as to complete image inpainting, and obtain a first inpainted image; in addition, the trained information propagation model further has an object complementation capability, and contour complementation processing is performed on a second-type object in the to-be-processed image by using the object complementation capability, to obtain an object target mask template; in addition, the trained information propagation model may further determine an image initial mask template corresponding to an initial blurred region based on the inpainted image; and finally, the trained information propagation model in phase 1 simultaneously outputs the first inpainted image, an image initial mask template corresponding to an initial blurred region whose inpainting result is blurred in the first inpainted image, and the object target mask template.

Phase 2: First, determine a first quantity of initial blurred pixels in the initial blurred region in the image initial mask template, then determine whether the first quantity is greater than a first threshold, and if the first quantity of the initial blurred pixels in the initial blurred region is less than the first threshold, ignore the initial blurred region, output the first inpainted image as a target inpainted image, and perform no subsequent processing; if the first quantity of the initial blurred pixels in the initial blurred region reaches the first threshold, connect scattered initial blurred regions by using a dilation and erosion operation to obtain a processed image target mask template, after the image target mask template is obtained, determine a second quantity of intermediate blurred pixels in the blurred region in the image target mask template, then determine whether the second quantity is greater than a second threshold, and if the second quantity of the intermediate blurred pixels is less than the second threshold, ignore the blurred region, output the first inpainted image as the target inpainted image, and perform no subsequent processing; and if the second quantity of the intermediate blurred pixels reaches the second threshold, invoke an image inpainting model to inpaint a pixel position of the blurred region in the image target mask template on the first inpainted image based on the processed image target mask template.

Phase 3: On the basis of phase 2, if a quantity of pixels, changed in the mask region of the second-type object, of the object target mask template relative to the object initial mask template is less than a third threshold, consider that the mask region of the second-type object has no object contour that needs to be complemented, and use a second inpainted image as a target inpainted image; and if the quantity of pixels, changed in the mask region of the second-type object, of the object target mask template relative to the object initial mask template reaches the third threshold, invoke an object inpainting model to inpaint pixels of the mask region of the second-type object, cover inpainting content of an image inpainting module, obtain a third inpainted image, and use the third inpainted image as the target inpainted image.

In this application, the first inpainted image, the image initial mask template, and the object target mask template are determined based on the to-be-processed image and the object initial mask template by using the trained information propagation model, and reference pixel propagation is implemented based on the trained information propagation model, so that image content in which complex movement occurs in a background is better inpainted. After the to-be-inpainted image element is inpainted, the first inpainted image is obtained. To ensure accuracy of image processing in the image inpainting process, when it is determined that the first quantity of the initial blurred pixels included in the image initial mask template reaches the first threshold, morphological processing is performed on the blurred region corresponding to the initial blurred pixel to obtain the image target mask template, so that scattered initial blurred regions are connected, and the blurred region is more regular, thereby improving accuracy of determining. Then, the second quantity of the intermediate blurred pixels included in the image target mask template is determined. When the second quantity reaches the second threshold, in the first inpainted image, inpainting processing is performed on the pixel region corresponding to the intermediate blurred pixel by using the image inpainting model to obtain the second inpainted image, and inpainting processing is performed on the blurred region in the first inpainted image, that is, the blurred region in the first inpainted image is enhanced. Finally, when it is determined that the contour of the second-type object in the object initial mask template is inconsistent with the contour of the second-type object in the object target mask template, in the second inpainted image, inpainting processing is performed on the pixel region corresponding to the second-type object by using the object inpainting model to obtain the third inpainted image, so that inpainting processing is performed on a shielded object region, that is, the blurred region in the second inpainted image is enhanced. Inpainting processing is performed on a blurred region with blurred inpainting caused by a complex texture and an object shielding condition, and enhancement processing is performed on the blurred region, thereby improving image quality of a target inpainted image.

In this embodiment of this application, in a process of performing image processing on the to-be-processed image, the trained information propagation model, the trained image inpainting model, and the trained object inpainting model are involved. Before the model is used, model training needs to be performed to ensure accuracy of model output. The following describes a model training process in detail.

I. Information propagation model

In this embodiment of this application, a trained information propagation model is obtained after cyclic iterative training is performed on a to-be-trained information propagation model according to a training sample in a training sample data set.

The following uses one cyclic iterative process as an example to describe a training process of the to-be-trained information propagation model.

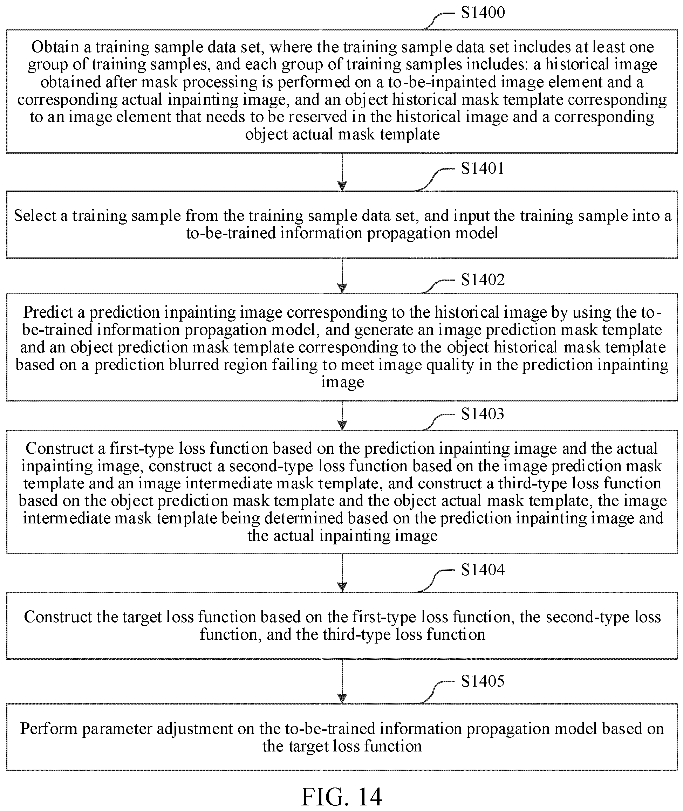

Referring to FIG. 14, FIG. 14 is a training method for an information propagation model according to an embodiment of this application, including the following operations:

Operation S1400: Obtain a training sample data set, where the training sample data set includes at least one group of training samples, and each group of training samples includes: a historical image obtained after mask processing is performed on a to-be-inpainted image element and a corresponding actual inpainted image, and an object historical mask template corresponding to an image element that needs to be reserved in the historical image and a corresponding object actual mask template.

Operation S1401: Select a training sample from the training sample data set, and input the training sample into a to-be-trained information propagation model.

Operation S1402: Predict a prediction inpainted image corresponding to the historical image by using the to-be-trained information propagation model, and generate an image prediction mask template and an object prediction mask template corresponding to the object historical mask template based on a prediction blurred region in the prediction inpainted image.

Operation S1403: Construct a first-type loss function based on the prediction inpainted image and the actual inpainted image, construct a second-type loss function based on the image prediction mask template and an image intermediate mask template, and construct a third-type loss function based on the object prediction mask template and the object actual mask template, the image intermediate mask template being determined based on the prediction inpainted image and the actual inpainted image.

In a possible implementation, the first-type loss function is determined in the following manner:

determining a first sub-loss function based on an image difference pixel value between the prediction inpainted image and the actual inpainted image; that is, the first sub-loss function is constructed by using a loss $L_1$, and the first sub-loss function is denoted as $L_1^{tcomp}$;

determining a second sub-loss function based on a second comparison result between the prediction inpainted image and the actual inpainted image, the second comparison result being configured for representing whether the prediction inpainted image is consistent with the actual inpainted image; that is, the second sub-loss function is constructed by using an adversarial loss $L_{gen}$, and the second sub-loss function is denoted as $L_{gen}^{tcomp}$; and

determining the first-type loss function based on the first sub-loss function and the second sub-loss function.

In a possible implementation, the second-type loss function is determined in the following manner:

determining a third sub-loss function based on a mask difference pixel value between the image prediction mask template and the image intermediate mask template, and using the third sub-loss function as the second-type loss function. The image prediction mask template is obtained when a pixel quantity $\tilde{d}_t$ of a prediction blurred region in the prediction inpainted image is greater than a specified threshold.

That is, the third sub-loss function is constructed by using a loss $L_1$, and the third sub-loss function is denoted as $L_1^{blur}$. In addition:

$$L_1^{blur} = \sum_{t=0}^{t=T} \sum_{c=0}^{H*W-1} |d_t - \tilde{d}_t|.$$

$c$ is RGB3 channels, H*W represents a matrix with a size of H*W, $\tilde{d}_t$ is denoted as a prediction value of $d_t$, $d_t$ is an actual difference between the prediction inpainted image and the actual inpainted image, that is, the pixel quantity of the prediction inpainted image compared with the actual blurred region in the actual inpainted image,

$d_t = \sum_{c=0}^{2} |x_{tcomp_{t'}} - y_t|$, $x_{tcomp_{t'}}$ represents the prediction inpainted image, and $y_t$ is the actual inpainted image.

In a possible implementation, the third-type loss function is determined in the following manner:

determining a fourth sub-loss function based on an object difference pixel value between the object prediction mask template and a historical object actual mask template; that is, the fourth sub-loss function is constructed by using a loss

$L_1$, the fourth sub-loss function is denoted as $L_1^{obj}$, and $L_1^{obj} = \Sigma_{t=0}^{T} L_1^{obj}\left(m_{obj_{comp_t}}, m_{obj_{full_t}}\right)$, where

$m_{obj_{comp_t}}$ represents the object prediction mask template, and $m_{obj_{full_t}}$ represents the historical object actual mask template;

determining a fifth sub-loss function based on similarity between the object prediction mask template and the historical object actual mask template; that is, the fifth sub-loss function is constructed by using a dice loss $L_{dice}$, the fifth sub-loss function is denoted as $L_{dice}^{obj}$, and $L_{dice}^{obj} = \Sigma_{t=0}^{T} L_{dice}^{obj}\left(m_{obj_{comp_t}}, m_{obj_{full_t}}\right)$, where $m_{obj_{comp_t}}$ represents the object prediction mask template, and $m_{obj_{full_t}}$ represents the historical object actual mask template; and

determining the third-type loss function based on the fourth sub-loss function and the fifth sub-loss function.

Operation S1404: Construct the target loss function based on the first-type loss function, the second-type loss function, and the third-type loss function.

The target loss function is:

$$L^{stage1} = \lambda_1^{tcomp} L_1^{tcomp} + \lambda_{gen}^{tcomp} L_{gen}^{tcomp} + \lambda_1^{blur} L_1^{blur} + \lambda_1^{obj} L_1^{obj} + \lambda_{dice}^{obj} L_{dice}^{obj}$$

Operation S1405: Perform parameter adjustment on the to-be-trained information propagation model based on the target loss function.

II. Image inpainting model

In this embodiment of this application, the image inpainting model selects an image generation tool configured for a blurred region, such as a latent diffusion model (LDM) or large mask inpainting (LaMa).

When the LDM model is being trained, an original image, an image mask template corresponding to the original image, a guide text, and a target image are inputted into the to-be-trained LDM model, and a foreground part and a background part are repeatedly mixed in the LDM model based on the guide text to obtain a prediction image. A loss function is constructed based on the prediction image and the original image, and parameter adjustment is performed on the to-be-trained LDM model based on the loss function. The foreground part is a part that needs to be inpainted, and the background part is another part in the original image different from the part that needs to be inpainted. The target image is an image that meets an inpainting standard after image inpainting is performed on the original image.

When the LaMa model is being trained, an original image, an image mask template corresponding to the original image, and a target image are inputted into the to-be-trained LaMa model, and the original image including an image mask and the image mask of the original image are superimposed in the LaMa model to obtain a 4-channel image. After a down-sampling operation is performed on the 4-channel image, fast Fourier convolution processing is performed, and after fast Fourier processing is performed, an up-sampling operation is performed to obtain a prediction image. An adversarial loss is constructed based on the original image and the prediction image, a loss function is constructed based on a perceptual loss of a receptive field, and parameter adjustment is performed on the to-be-trained LaMa model based on the loss function. The receptive field is a size of a region mapped on the original image on a feature graph outputted by a convolutional neural network through each layer.

III. Object inpainting model

In this embodiment of this application, an object inpainting model uses transformer as a model of a network structure, for example, STTN.

When the object inpainting model is being trained, an original image and an original image that includes a mask region are inputted into the to-be-trained object inpainting model, and a prediction image is obtained by simultaneously padding, in the object inpainting model, mask regions in all inputted images with self-attention. A loss function is constructed based on the prediction image and the original image, and parameter adjustment is performed on the to-be-trained object inpainting model based on the loss function. The loss function in the training process uses a loss $L_1$ and

an adversarial loss $L_{gen}$.

The models involved in the embodiments of this application may be independently trained, or may be jointly trained.

In the embodiments of this application, training modes for an information propagation model, an image inpainting model, and an object inpainting model are proposed, so as to represent accuracy of output results of the information propagation model, the image inpainting model, and the object inpainting model. Further, in the embodiments of this application, in an image processing process, when the model is configured for processing, accuracy of image processing and image quality of a processed video frame image are improved.

Based on the same inventive concept as the embodiments of this application, an embodiment of this application further provides an image processing apparatus. A principle of solving a problem by the apparatus is similar to that of the method in the foregoing embodiment. Therefore, for implementation of the apparatus, references may be made to implementation of the foregoing method, and details are not described again.

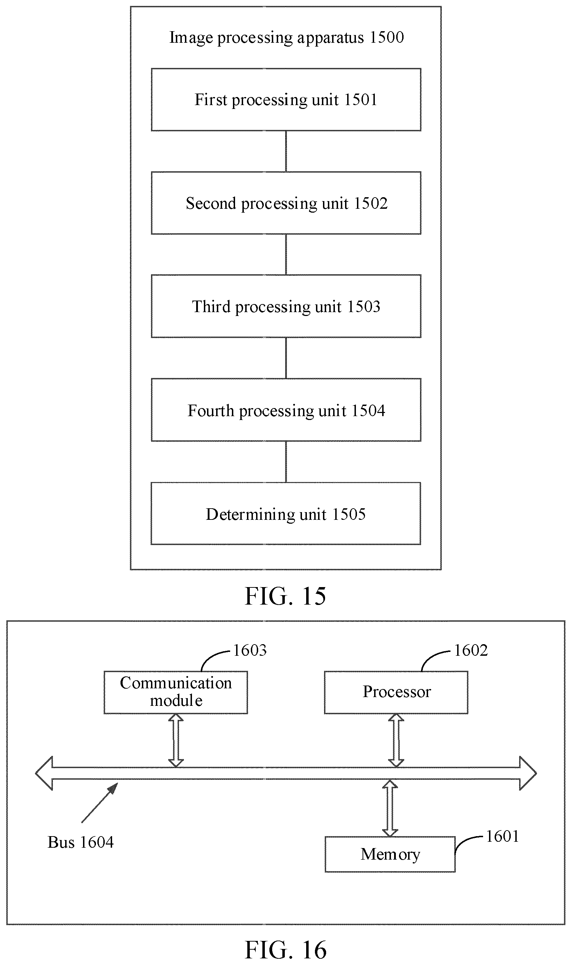

Referring to FIG. 15, FIG. 15 exemplarily provides an image processing apparatus 1500 according to an embodiment of this application. The image processing apparatus 1500 includes:

a first processing unit 1501, configured to perform mask processing on a first-type object included in an obtained target video frame image, to obtain a to-be-processed image after mask processing; the first-type object being a to-be-inpainted image element; a second processing unit 1502, configured to: perform inpainting processing on the first-type object in the to-be-processed image to obtain a first inpainted image, and generate a corresponding image initial mask template based on an initial blurred region in the first inpainted image; a third processing unit 1503, configured to: perform, when a first quantity of initial blurred pixels included in the image initial mask template reaches a first threshold, morphological processing on an initial blurred region corresponding to the initial blurred pixel to obtain an image target mask template; a fourth processing unit 1504, configured to: perform, when a second quantity of intermediate blurred pixels included in the image target mask template reaches a second threshold, inpainting processing on a pixel region corresponding to the intermediate blurred pixel in the first inpainted image, to obtain a second inpainted image; and a determining unit 1505, configured to determine a target inpainted image corresponding to the to-be-processed image based on the second inpainted image.

In a possible implementation, the second processing unit 1502 is specifically configured to: input a video sequence including the to-be-processed image into a trained information propagation model; and perform, in the trained information propagation model, inpainting processing on the first-type object in the to-be-processed image based on an image element in another video frame image in the video sequence to obtain the first inpainted image, and generate a corresponding image initial mask template based on the initial blurred region in the first inpainted image.

In a possible implementation, the second processing unit 1502 is specifically configured to: input an object initial mask template into the trained information propagation model, the object initial mask template being determined after identification is performed on a second-type object included in the video frame image, and the second-type object being an image element that needs to be reserved; and perform, in the trained information propagation model, object contour complementation processing on the second-type object in the object initial mask template to obtain an object target mask template.

In a possible implementation, the determining unit 1505 is specifically configured to: compare the object initial mask template with the object target mask template to obtain a first comparison result, the first comparison result being configured for representing whether contours of the second-type objects are consistent; and process the second inpainted image based on the first comparison result, to obtain the target inpainted image.

In a possible implementation, the determining unit 1505 is specifically configured to: perform, if the first comparison result represents that the contours of the second-type objects are inconsistent, inpainting processing on a pixel region corresponding to the second-type object in the second inpainted image to obtain a third inpainted image, and use the third inpainted image as the target inpainted image; and use the second inpainted image as the target inpainted image if the first comparison result represents that the contours of the second-type objects are consistent.

In a possible implementation, the trained information propagation model is trained in the following manner: performing cyclic iterative training on a to-be-trained information propagation model according to a training sample in a training sample data set to obtain the trained information propagation model, where the following operations are performed in one cyclic iterative process: selecting a training sample from the training sample data set; the training sample being: a historical image obtained after mask processing is performed on a to-be-inpainted image element, and an object historical mask template corresponding to an image element that needs to be reserved in the historical image; inputting the training sample into the information propagation model, predicting a prediction inpainted image corresponding to the historical image, and generating an image prediction mask template and an object prediction mask template corresponding to the object historical mask template based on a prediction blurred region in the prediction inpainted image; and performing parameter adjustment on the information propagation model by using a target loss function constructed based on the prediction inpainted image, the image prediction mask template, and the object prediction mask template.

In a possible implementation, the training sample further includes: an actual inpainted image corresponding to the historical image, and an object actual mask template corresponding to the object historical mask template; and the target loss function is constructed in the following manner: constructing a first-type loss function based on the prediction inpainted image and the actual inpainted image, constructing a second-type loss function based on the image prediction mask template and an image intermediate mask template, and constructing a third-type loss function based on the object prediction mask template and the object actual mask template, the image intermediate mask template being determined based on the prediction inpainted image and the actual inpainted image; and constructing the target loss function based on the first-type loss function, the second-type loss function, and the third-type loss function.

In a possible implementation, the first-type loss function is determined in the following manner: determining a first sub-loss function based on an image difference pixel value between the prediction inpainted image and the actual inpainted image; determining a second sub-loss function based on a second comparison result between the prediction inpainted image and the actual inpainted image, the second comparison result being configured for representing whether the prediction inpainted image is consistent with the actual inpainted image; and determining the first-type loss function based on the first sub-loss function and the second sub-loss function.

In a possible implementation, the second-type loss function is determined in the following manner: determining a third sub-loss function based on a mask difference pixel value between the image prediction mask template and the image intermediate mask template, and using the third sub-loss function as the second-type loss function.

In a possible implementation, the third-type loss function is determined in the following manner: determining a fourth sub-loss function based on an object difference pixel value between the object prediction mask template and a historical object actual mask template; determining a fifth sub-loss function based on similarity between the object prediction mask template and the historical object actual mask template; and determining the third-type loss function based on the fourth sub-loss function and the fifth sub-loss function.

In a possible implementation, after generating the corresponding image initial mask template, the second processing unit 1502 is further configured to: use the first inpainted image as the target inpainted image corresponding to the to-be-processed image when the first quantity of the initial blurred pixels included in the image initial mask template is less than the first threshold.

In a possible implementation, after obtaining the image target mask template, the third processing unit 1503 is further configured to: use the first inpainted image as the target inpainted image corresponding to the to-be-processed image when the second quantity of the intermediate blurred pixels included in the image target mask template is less than the second threshold.

For convenience of description, the foregoing parts are divided into units (or modules) for description by function. Certainly, in implementation of this application, the functions of the units (or modules) may be implemented in the same piece of or a plurality of pieces of software and/or hardware.

A person skilled in the art can understand that the aspects of this application may be implemented as systems, methods, or program products. Therefore, the aspects of this application may be specifically embodied in the following forms: hardware only implementations, software only implementations (including firmware, micro code, etc.), or implementations with a combination of software and hardware, which are collectively referred to as "circuit", "module", or "system" herein.

After introducing the image processing method and apparatus in the exemplary implementation of this application, the following describes an electronic device configured for image processing according to another exemplary implementation of this application.

Based on the same inventive concept as the foregoing method embodiments of this application, an embodiment of this application further provides an electronic device, and the electronic device may be a server. In this embodiment, a structure of the electronic device may be shown in FIG. 16, including a memory 1601, a communication module 1603, and one or more processors 1602.

The memory 1601 is configured to store a computer program executed by the processor 1602. The memory 1601 may mainly include a program storage region and a data storage region, where the program storage region may store an operating system, a program required for running an instant messaging function, and the like. The data storage area can store various instant messaging information and operation instruction sets.

The memory 1601 may be a volatile memory such as a random access memory (RAM); the memory 1601 may alternatively be a non-volatile memory such as a read-only memory, a flash memory, a hard disk drive (HDD), or a solid-state drive (SSD); or the memory 1601 is any other medium that can be configured for carrying or storing an expected computer program in the form of an instruction or data structure and that can be accessed by a computer, but is not limited thereto. The memory 1601 may be a combination of the foregoing memories.

The processor 1602 may include one or more central processing units (CPU), a digital processing unit, or the like. The processor 1602 is configured to implement the foregoing image processing method when invoking the computer program stored in the memory 1601.

The communication module 1603 is configured to communicate with a terminal device and another server.

A specific connection medium among the memory 1601, the communication module 1603, and the processor 1602 is not limited in this embodiment of this application. In this embodiment of this application, the memory 1601 is connected to the processor 1602 by using a bus 1604 in FIG. 16. The bus 1604 is described by using a bold line in FIG. 16. A connection manner between other components is merely a schematic description, and is not limiting. The bus 1604 may be classified into an address bus, a data bus, a control bus, and the like. For ease of description, in FIG. 16, only one bold line is configured for description, but this does not mean that only one bus or one type of bus exists.

The memory 1601 stores a computer storage medium, the computer storage medium stores computer executable instructions, and the computer executable instructions are configured for implementing the image processing method in this embodiment of this application. The processor 1602 is configured to execute the foregoing image processing method.

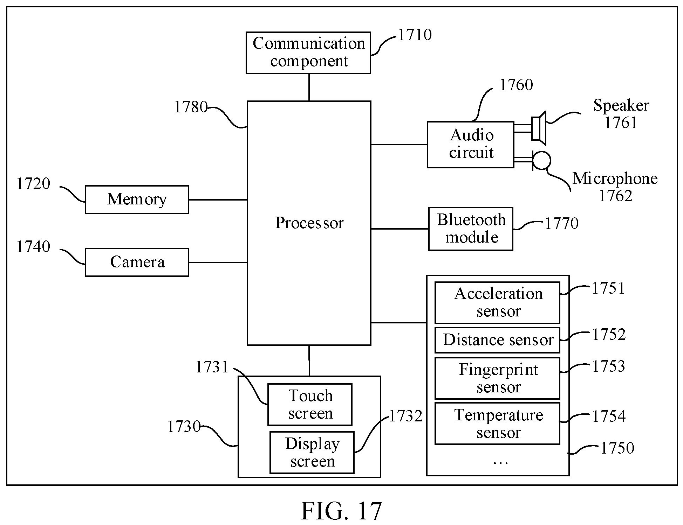

In another embodiment, the electronic device may alternatively be another electronic device, such as the terminal device 310 shown in FIG. 3. In this embodiment, the structure of the electronic device may be shown in FIG. 17, including: a communication component 1710, a memory 1720, a display unit 1730, a camera 1740, a sensor 1750, an audio circuit 1760, a Bluetooth module 1770, a processor 1780, and the like.

The communication component 1710 is configured to communicate with the server. In some embodiments, a circuit wireless fidelity (Wi-Fi) module may be included. The Wi-Fi module belongs to a short-range wireless transmission technology, and the electronic device may help a user to send and receive information by using the Wi-Fi module.

The memory 1720 may be configured to store a software program and data. The processor 1780 runs the software program and the data stored in the memory 1720, to implement various functions and data processing of the terminal device 310. The memory 1720 may include a high speed random access memory, and may also include a non-volatile memory, such as at least one magnetic disk storage device, a flash memory, or another volatile solid-state storage device. The memory 1720 stores an operating system that enables the terminal device 310 to run. In this application, the memory 1720 may store an operating system and various application programs, and may further store code for executing the image processing method in this embodiment of this application.

The display unit 1730 may be further configured to display information entered by a user or information provided for the user and graphical user interfaces (GUI) of various menus of the terminal device 310. Specifically, the display unit 1730 may include a display screen 1732 disposed on a front face of the terminal device 310. The display screen 1732 may be configured in a form of a liquid crystal display, a light emitting diode, or the like. The display unit 1730 may be configured to display a target inpainted image and the like in the embodiments of this application.

The display unit 1730 may be further configured to receive inputted digital or character information, and generate a signal input related to user settings and function control of the terminal device 310. Specifically, the display unit 1730 may include a touchscreen 1731 disposed on the front face of the terminal device 310, and may collect a touch operation, such as tapping a button or dragging a scroll box, of a user on or near the touchscreen 1731.

The touchscreen 1731 may cover the display screen 1732, or may be integrated with the display screen 1732 to implement an input and output function of the terminal device 310. After integration, the touchscreen 1731 may be referred to as a touch display screen. In this application, the display unit 1730 may display an application program and corresponding operations.

The camera 1740 may be configured to capture a static image. There may be one or more cameras 1740. An object is projected onto a photosensitive element by using a lens to generate an optical image. The photosensitive element may be a charge coupled device (CCD) or a complementary metal-oxide-semiconductor (CMOS) phototransistor. The photosensitive element converts an optical signal into an electrical signal, and then transmits the electrical signal to the processor 1780 to convert the optical signal into a digital image signal.

The terminal device may further include at least one sensor 1750, such as an acceleration sensor 1751, a distance sensor 1752, a fingerprint sensor 1753, and a temperature sensor 1754. The terminal device may be further configured with another sensor such as a gyroscope, a barometer, a hygrometer, a thermometer, an infrared sensor, an optical sensor, and a motion sensor.

The audio circuit 1760, a speaker 1761, and a microphone 1762 may provide audio interfaces between the user and the terminal device 310. The audio circuit 1760 may convert received audio data into an electric signal and transmit the electric signal to the loudspeaker 1761. The loudspeaker 1761 converts the electric signal into a sound signal and output the sound signal. The terminal device 310 may be further configured with a volume button to adjust volume of a sound signal. In addition, the microphone 1762 converts a collected audio signal into an electrical signal, and the audio circuit 1760 receives the electrical signal, converts the electrical signal into audio data, and then outputs the audio data to the communication component 1710 to send to, for example, another terminal device 310, or outputs the audio data to the memory 1720 for further processing.

The Bluetooth module 1770 is configured to exchange information with another Bluetooth device that has a Bluetooth module by using the Bluetooth protocol. For example, the terminal device may establish a Bluetooth connection to a wearable electronic device (for example, a smart watch) that also has a Bluetooth module by using the Bluetooth module 1770, so as to exchange data.

The processor 1780 is a control center of the terminal device, is connected to each part of the entire terminal by using various interfaces and lines, and performs various functions and data processing of the terminal device by running or executing the software program stored in the memory 1720 and invoking the data stored in the memory 1720. In some embodiments, the processor 1780 may include one or more processing units. The processor 1780 may further integrate an application processor and a baseband processor, where the application processor mainly processes an operating system, a user interface, an application program, and the like, and the baseband processor mainly processes wireless communication. The baseband processor may alternatively not be integrated into the processor 1780. In this application, the processor 1780 may run an operating system, an application program, user interface display and a touch response, and the image processing method in the embodiment of this application. In addition, the processor 1780 is coupled to the display unit 1730.

In some possible implementations, aspects of the image processing method provided in this application may further be implemented in a form of a program product. The program product includes a computer program. When the program product runs on an electronic device, the computer program is configured to enable the electronic device to perform the operations in the image processing methods described in the foregoing descriptions according to the exemplary implementations of this application.

The program product may be any combination of one or more readable mediums. The readable medium may be a computer-readable signal medium or a computer-readable storage medium. The readable storage medium may be, for example, but is not limited to, an electric, magnetic, optical, electromagnetic, infrared, or semi-conductive system, apparatus, or device, or any combination thereof. More specific examples (non-exhaustive lists) of the readable storage medium include: an electrical connection having one or more wires, a portable disk, a hard disk, a random access memory (RAM), a read-only memory (ROM), an erasable programmable read-only memory (EPROM), an optical fiber, a portable compact disk read-only memory (CD-ROM), an optical storage device, a magnetic storage device, or any appropriate combination thereof.

The program product in the implementation of this application may use a portable compact disk read-only memory (CD-ROM) and include a computer program, and may run on a computing apparatus. However, the program product in this application is not limited thereto. In this specification, the readable storage medium may be any tangible medium including or storing a program, and the program may be used by or used in combination with an instruction execution system, apparatus, or device.

A readable signal medium may include a data signal being in a baseband or transmitted as a part of a carrier, which carries a computer-readable program. A data signal propagated in such a way may assume a plurality of forms, including, but not limited to, an electromagnetic signal, an optical signal, or any appropriate combination thereof. The readable storage medium may alternatively be any readable medium other than a readable storage medium, and the readable medium may send, propagate, or transmit a program used by or in combination with an instruction execution system, apparatus, or device.

The computer program included in the readable medium may be transmitted by using any suitable medium, including but not limited to wireless, wired, optical cable, RF, or the like, or any suitable combination thereof.

Although several units or subunits of the apparatus are mentioned in the foregoing detailed description, such division is merely exemplary and not mandatory. Actually, according to the implementations of this application, the features and functions of two or more units described above may be specifically implemented in one unit. On the contrary, the features and functions of one unit described above may be further divided to be embodied by a plurality of units.

In addition, although operations of the methods of this application are described in a specific order in the accompanying drawings, this does not require or imply that these operations need to be performed in the specific order, or that all the operations shown need to be performed to achieve an expected result. Additionally or alternatively, some operations may be omitted, multiple operations are combined into one operation for execution, and/or one operation is decomposed into multiple operations for execution.

A person skilled in the art can understand that the embodiments of this application may be provided as a method, a system, or a computer program product. Therefore, this application may use a form of hardware-only embodiments, software-only embodiments, or embodiments combining software and hardware. In addition, this application may be in a form of a computer program product implemented on one or more computer-available storage media (including but not limited to a magnetic disk memory, a CD-ROM, an optical memory, and the like) that include a computer-available computer program.

## Claims

1.  An image processing method, executable by a computer device, the method comprising:

    performing (S400) mask processing on a first-type object comprised in an input video frame image, to obtain a mask-processed image, the first-type object being an image element for inpainting;

performing (S401) inpainting processing on the first-type object in the image to obtain a first inpainted image, **characterized in that** the method further comprises:

generating an image initial mask template based on a first blurred region in the first inpainted image;
performing (S402), when a first quantity of initial blurred pixels comprised in the image initial mask template reaches a first threshold, morphological processing on the first blurred region defined by the initial blurred pixels to obtain an image target mask template;
performing (S403), when a second quantity of intermediate blurred pixels comprised in the image target mask template reaches a second threshold, inpainting processing on a second blurred region defined by the intermediate blurred pixels in the first inpainted image, to obtain a second inpainted image; and
determining (S404) a target inpainted image corresponding to the masked-processed image based on the second inpainted image.

2. The method according to claim 1, wherein the performing (S401) inpainting processing on the first-type object in the image to obtain a first inpainted image, and generating an image initial mask template based on a first blurred region in the first inpainted image comprises:

inputting a video sequence comprising the mask-processed image into a trained information propagation model; and
performing, in the trained information propagation model, inpainting processing on the first-type object in the mask-processed image based on an image element in another video frame image in the video sequence to obtain the first inpainted image, and generating the image initial mask template based on the first blurred region in the first inpainted image.

3. The method according to claim 2, wherein the method further comprises:

inputting an object initial mask template into the trained information propagation model, the object initial mask template being determined after identifying a second-type object comprised in the video frame image, and the second-type object being an image element that needs to be reserved; and
performing, in the trained information propagation model, object contour complementation processing on the second-type object in the object initial mask template to obtain an object target mask template.

4. The method according to claim 3, wherein the determining (S404) a target inpainted image corresponding to the masked-processed image based on the second inpainted image comprises:

comparing (S1106) the object initial mask template with the object target mask template to obtain a first comparison result, the first comparison result indicating whether contours of the second-type objects are consistent; and
processing the second inpainted image based on the first comparison result, to obtain the target inpainted image.

5. The method according to claim 4, wherein the processing the second inpainted image based on the first comparison result, to obtain the target inpainted image comprises:

performing (S1108), if the first comparison result indicates that the contours of the second-type objects are inconsistent, inpainting processing on a pixel region corresponding to the second-type object in the second inpainted image to obtain a third inpainted image, and using the third inpainted image as the target inpainted image; and
using (S1107) the second inpainted image as the target inpainted image if the first comparison result indicates that the contours of the second-type objects are consistent.

6. The method according to claim 2 or 3, wherein the trained information propagation model is trained by:
performing cyclic iterative training on an information propagation model according to a training sample in a training sample data set to obtain the trained information propagation model, wherein the following operations are performed in one cyclic iterative process:

selecting (S1401) a training sample from the training sample data set; the training sample comprising: a historical image obtained after mask processing is performed on an image element for inpainting, and an object historical mask template corresponding to an image element that needs to be reserved in the historical image;

inputting (S1401) the training sample into the information propagation model, predicting (S1402) a prediction inpainted image corresponding to the historical image, and generating (S1402) an image prediction mask template and an object prediction mask template corresponding to the object historical mask template based on a prediction blurred region in the prediction inpainted image; and

performing (S1405) parameter adjustment on the information propagation model by using a target loss function constructed based on the prediction inpainted image, the image prediction mask template, and the object prediction mask template.

7. The method according to claim 6, wherein the training sample further comprises: an actual inpainted image corresponding to the historical image, and an object actual mask template corresponding to the object historical mask template; and
the target loss function of the information propagation model is constructed by:

constructing (S1403) a first-type loss function based on the prediction inpainted image and the actual inpainted image, constructing a second-type loss function based on the image prediction mask template and an image intermediate mask template, and constructing a third-type loss function based on the object prediction mask template and the object actual mask template, the image intermediate mask template being determined based on the prediction inpainted image and the actual inpainted image; and
constructing (S1404) the target loss function based on the first-type loss function, the second-type loss function, and the third-type loss function.

8. The method according to claim 7, wherein the first-type loss function is determined by:

determining a first sub-loss function based on an image difference pixel value between the prediction inpainted image and the actual inpainted image;
determining a second sub-loss function based on a second comparison result between the prediction inpainted image and the actual inpainted image, the second comparison result indicating whether the prediction inpainted image is consistent with the actual inpainted image; and
determining the first-type loss function based on the first sub-loss function and the second sub-loss function.

9. The method according to claim 8, wherein the second-type loss function is determined by:
determining a third sub-loss function based on a mask difference pixel value between the image prediction mask template and the image intermediate mask template, and using the third sub-loss function as the second-type loss function.

10. The method according to claim 8 or 9, wherein the third-type loss function is determined by:

determining a fourth sub-loss function based on an object difference pixel value between the object prediction mask template and a historical object actual mask template;
determining a fifth sub-loss function based on similarity between the object prediction mask template and the historical object actual mask template; and
determining the third-type loss function based on the fourth sub-loss function and the fifth sub-loss function.

11. The method according to any one of claims 1 to 10, further comprising:
using (S1210) the first inpainted image as the target inpainted image corresponding to the masked-processed image when the first quantity of the initial blurred pixels comprised in the image initial mask template is less than the first threshold.

12. The method according to any one of claims 1 to 10, further comprising:
using (S1210) the first inpainted image as the target inpainted image corresponding to the masked-processed image when the second quantity of the intermediate blurred pixels comprised in the image target mask template is less than the second threshold.

13. An image processing apparatus (1500), comprising

a first processing unit (1501), configured to perform mask processing on a first-type object comprised in an input video frame image, to obtain a mask-processed image, the first-type object being an image element for inpainting;
a second processing unit (1502), configured to: perform inpainting processing on the first-type object in the masked-processed image to obtain a first inpainted image, **characterized in that** the second processing unit is further configured to:

generate an image initial mask template based on a first blurred region in the first inpainted image; and further **characterized in that** the apparatus further comprises:

a third processing unit (1503), configured to: perform, when a first quantity of initial blurred pixels comprised in the image initial mask template reaches a first threshold, morphological processing on the first blurred region defined by the initial blurred pixels to obtain an image target mask template; a fourth processing unit (1504), configured to: perform, when a second quantity of intermediate blurred pixels comprised in the image target mask template reaches a second threshold, inpainting processing on a second blurred region defined by the intermediate blurred pixels in the first inpainted image, to obtain a second inpainted image; and a determining unit (1505), configured to determine a target inpainted image corresponding to the masked-processed image based on the second inpainted image.

14. An electronic device, comprising: a memory (1601) and a processor (1602);

the memory (1601) being configured to store a computer program; and the processor (1602) being configured to execute the computer program to implement the operations of the method according to any one of claims 1 to 12.

15. A computer-readable storage medium, having a computer program stored therein, the computer program, when executed by a processor, implementing the operations of the method according to any one of claims 1 to 12.

## Patentansprüche

1. Bildverarbeitungsverfahren, das von einer Computervorrichtung ausführbar ist, wobei das Verfahren Folgendes umfasst:

Durchführen (S400) einer Maskenverarbeitung an einem Objekt einer ersten Art, das in einem eingegebenen Videoframebild umfasst ist, um ein maskenverarbeitetes Bild zu erhalten, wobei das Objekt der ersten Art ein Bildelement für Inpainting ist; Durchführen (S401) einer Inpaintingverarbeitung am Objekt der ersten Art im Bild, um ein erstes Inpaintingbild zu erhalten, **dadurch gekennzeichnet, dass** das Verfahren ferner Folgendes umfasst:

Erzeugen einer anfänglichen Bildmaskenvorlage auf Basis einer ersten verschwommenen Region im ersten Inpaintingbild; wenn eine erste Menge von anfänglichen verschwommenen Pixeln, die in der anfänglichen Bildmaskenvorlage umfasst sind, einen ersten Schwellwert erreicht, Durchführen (S402) einer morphologischen Verarbeitung an der ersten verschwommenen Region, die durch die anfänglichen verschwommenen Pixel definiert ist, um eine Zielbildmaskenvorlage zu erhalten; wenn eine zweite Menge von verschwommenen Zwischenpixeln, die in der Zielbildmaskenvorlage umfasst sind, einen zweiten Schwellwert erreicht, Durchführen (S403) einer Inpaintingverarbeitung an einer zweiten verschwommenen Region, die durch die verschwommenen Zwischenpixel im ersten Inpaintingbild definiert ist, um ein zweites Inpaintingbild zu erhalten; und Bestimmen (S404) eines Zielinpaintingbildes, das dem maskenverarbeiteten Bild entspricht, auf Basis des zweiten Inpaintingbildes.

2. Verfahren nach Anspruch 1, wobei das Durchführen (S401) einer Inpaintingverarbeitung am Objekt der ersten Art im Bild, um ein erstes Inpaintingbild zu erhalten, und das Erzeugen einer anfänglichen Bildmaskenvorlage auf Basis einer ersten verschwommenen Region im ersten Inpaintingbild Folgendes umfasst:

Eingeben einer Videosequenz, die das maskenverarbeitete Bild umfasst, in ein trainiertes Informationsausbreitungsmodell; und Durchführen einer Inpaintingverarbeitung am Objekt der ersten Art im maskenverarbeiteten Bild im trainierten Informationsausbreitungsmodell auf Basis eines Bildelements in einem anderen Videoframebild in der Videosequenz, um das erste Inpaintingbild zu erhalten, und Erzeugen der anfänglichen Bildmaskenvorlage auf Basis der ersten verschwommenen Region im ersten Inpaintingbild.

3. Verfahren nach Anspruch 2, wobei das Verfahren ferner Folgendes umfasst:

Eingeben einer anfänglichen Objektmaskenvorlage in das trainierte Informationsausbreitungsmodell, wobei die anfängliche Objektmaskenvorlage nach Identifizieren eines Objekts einer zweiten Art, das im Videoframebild umfasst ist, bestimmt wird und wobei das Objekt der zweiten Art ein Bildelement ist, das reserviert werden muss; und

Durchführen einer Objektkonturkomplementierungsverarbeitung am Objekt der zweiten Art in der anfänglichen Objektmaskenvorlage im trainierten Informationsausbreitungsmodell, um eine Zielbildmaskenvorlage zu erhalten.

4. Verfahren nach Anspruch 3, wobei das Bestimmen (S404) eines Zielinpaintingbildes, das dem maskenverarbeiteten Bild entspricht, auf Basis des zweiten Inpaintingbildes Folgendes umfasst:

Vergleichen (S1106) der anfänglichen Objektmaskenvorlage mit der Zielbildmaskenvorlage, um ein erstes Vergleichsergebnis zu erhalten, wobei das erste Vergleichsergebnis anzeigt, ob Konturen der Objekte der zweiten Art konsistent sind; und

Verarbeiten des zweiten Inpaintingbildes auf Basis des ersten Vergleichsergebnisses, um das Zielinpaintingbild zu erhalten.

5. Verfahren nach Anspruch 4, wobei das Verarbeiten des zweiten Inpaintingbildes auf Basis des ersten Vergleichsergebnisses, um das Zielinpaintingbild zu erhalten, Folgendes umfasst:

wenn das erste Vergleichsergebnis anzeigt, dass die Konturen der Objekte der zweiten Art inkonsistent sind, Durchführen (S1108) einer Inpaintingverarbeitung an einer Pixelregion, die dem Objekt der zweiten Art im zweiten Inpaintingbild entspricht, um ein drittes Inpaintingbild zu erhalten, und Verwenden des dritten Inpaintingbildes als das Zielinpaintingbild; und

wenn das erste Vergleichsergebnis anzeigt, dass die Konturen der Objekte der zweiten Art konsistent sind, Verwenden (S1107) des zweiten Inpaintingbildes als das Zielinpaintingbild.

6. Verfahren nach Anspruch 2 oder 3, wobei das trainierte Informationsausbreitungsmodell durch Folgendes trainiert wird:
Durchführen eines zyklischen interaktiven Trainings an einem Informationsausbreitungsmodell gemäß einer Trainingsprobe in einem Trainingsprobendatensatz, um das trainierte Informationsausbreitungsmodell zu erhalten, wobei in einem zyklischen iterativen Prozess die folgenden Operationen durchgeführt werden:

Auswählen (S1401) einer Trainingsprobe aus dem Trainingsprobendatensatz; wobei die Trainingsprobe Folgendes umfasst: ein historisches Bild, das erhalten wird, nachdem eine Maskenverarbeitung an einem Bildelement für das Inpainting durchgeführt wurde, und eine historische Objektmaskenvorlage, die einem Bildelement entspricht, das im historischen Bild reserviert werden muss;

Eingeben (S1401) der Trainingsprobe in das Informationsausbreitungsmodell, Vorhersagen (S1402) eines Vorhersageinpaintingbildes, das dem historischen Bild entspricht, und Erzeugen (S1402) einer Vorhersagebildmaskenvorlage und einer Vorhersageobjektmaskenvorlage, die der historischen Objektmaskenvorlage entspricht, auf Basis einer verschwommenen Vorhersageregion im Vorhersageinpaintingbild; und

Durchführen (S1405) einer Parameteranpassung am Informationsausbreitungsmodell unter Verwendung einer Zielverlustfunktion, die auf Basis des Vorhersageinpaintingbildes, der Vorhersagebildmaskenvorlage und der Vorhersageobjektmaskenvorlage konstruiert wird.

7. Verfahren nach Anspruch 6, wobei die Trainingsprobe ferner Folgendes umfasst: ein tatsächliches Inpaintingbild, das dem historischen Bild entspricht und eine tatsächliche Objektmaskenvorlage, die der historischen Objektmaskenvorlage entspricht; und
die Zielverlustfunktion des Informationsausbreitungsmodells wird durch Folgendes konstruiert:

Konstruieren (S1403) einer Verlustfunktion einer ersten Art auf Basis des Vorhersageinpaintingbildes und des tatsächlichen Inpaintingbildes, Konstruieren einer Verlustfunktion einer zweiten Art auf Basis der Vorhersagebildmaskenvorlage und einer Zwischenbildmaskenvorlage und Konstruieren einer Verlustfunktion einer dritten Art auf Basis der Vorhersageobjektmaskenvorlage und der tatsächlichen Objektmaskenvorlage, wobei die Zwischenbildmaskenvorlage auf Basis des Vorhersageinpaintingbildes und des tatsächlichen Inpaintingbildes bestimmt wird; und

Konstruieren (S1404) der Zielverlustfunktion auf Basis der Verlustfunktion der ersten Art, der Verlustfunktion der zweiten Art und der Verlustfunktion der dritten Art.

8. Verfahren nach Anspruch 7, wobei die Verlustfunktion der ersten Art durch Folgendes bestimmt wird:

Bestimmen einer ersten Unterverlustfunktion auf Basis eines Differenzbildpixelwertes zwischen dem Vorhersageinpaintingbild und dem tatsächlichen Inpaintingbild;

Bestimmen einer zweiten Unterverlustfunktion auf Basis eines zweiten Vergleichsergebnisses zwischen dem Vorhersageinpaintingbild und dem tatsächlichen Inpaintingbild, wobei das zweite Vergleichsergebnis anzeigt, ob das Vorhersageinpaintingbild mit dem tatsächlichen Inpaintingbild konsistent ist; und

Bestimmen der Verlustfunktion der ersten Art auf Basis der ersten Unterverlustfunktion und der zweiten Unterverlustfunktion.

9. Verfahren nach Anspruch 8, wobei die Verlustfunktion der zweiten Art durch Folgendes bestimmt wird:
Bestimmen einer dritten Unterverlustfunktion auf Basis eines Differenzmaskenpixelwertes zwischen der Vorhersagebildmaskenvorlage und der Zwischenbildmaskenvorlage und Verwenden der dritten Unterverlustfunktion als die Verlustfunktion der zweiten Art.

10. Verfahren nach Anspruch 8 oder 9, wobei die Verlustfunktion der dritten Art durch Folgendes bestimmt wird:

Bestimmen einer vierten Unterverlustfunktion auf Basis des Differenzobjektpixelwertes zwischen der Vorhersageobjektmaskenvorlage und einer tatsächlichen historischen Objektmaskenvorlage;

Bestimmen einer fünften Unterverlustfunktion auf Basis einer Ähnlichkeit zwischen der Vorhersageobjektmaskenvorlage und der tatsächlichen historischen Objektmaskenvorlage; und

Bestimmen der Verlustfunktion der dritten Art auf Basis der vierten Unterverlustfunktion und der fünften Unterverlustfunktion.

11. Verfahren nach einem der Ansprüche 1 bis 10, das ferner Folgendes umfasst:
Verwenden (S1210) des ersten Inpaintingbildes als das Zielinpaintingbild, das dem maskenverarbeiteten Bild entspricht, wenn die erste Menge der anfänglichen verschwommenen Pixel, die in der anfänglichen Bildmaskenvorlage umfasst sind, kleiner ist als der erste Schwellwert.

12. Verfahren nach einem der Ansprüche 1 bis 10, das ferner Folgendes umfasst:
Verwenden (S1210) des ersten Inpaintingbildes als das Zielinpaintingbild, das dem maskenverarbeiteten Bild entspricht, wenn die zweite Menge der verschwommenen Zwischenpixel, die in der Zielbildmaskenvorlage umfasst sind, kleiner ist als der zweite Schwellwert.

13. Bildverarbeitungseinrichtung (1500), die Folgendes umfasst

eine erste Verarbeitungseinheit (1501), die dazu ausgelegt ist, eine Maskenverarbeitung an einem Objekt einer ersten Art, das in einem eingegebenen Videoframebild umfasst ist, durchzuführen, um ein maskenverarbeitetes Bild zu erhalten, wobei das Objekt der ersten Art ein Bildelement für Inpainting ist;

eine zweite Verarbeitungseinheit (1502), die zu Folgendem ausgelegt ist: Durchführen einer Inpaintingverarbeitung am Objekt der ersten Art im maskenverarbeiteten Bild, um ein erstes Inpaintingbild zu erhalten, **dadurch gekennzeichnet, dass** die zweite Verarbeitungseinheit ferner zu Folgendem ausgelegt ist:

Erzeugen einer anfänglichen Bildmaskenvorlage auf Basis einer ersten verschwommenen Region im ersten Inpaintingbild;
und ferner **dadurch gekennzeichnet, dass** die Einrichtung ferner Folgendes umfasst:

eine dritte Verarbeitungseinheit (1503), die zu Folgendem ausgelegt ist: wenn eine erste Menge von anfänglichen verschwommenen Pixeln, die in der anfänglichen Bildmaskenvorlage umfasst sind, einen ersten Schwellwert erreicht, Durchführen einer morphologischen Verarbeitung an der ersten verschwommenen Region, die durch die anfänglichen verschwommenen Pixel definiert ist, um eine Zielbildmaskenvorlage zu erhalten;

wenn eine zweite Menge von verschwommenen Zwischenpixeln, die in der Zielbildmaskenvorlage umfasst sind, einen zweiten Schwellwert erreicht, eine vierte Verarbeitungseinheit (1504), die zu Folgendem ausgelegt ist: Durchführen einer Inpaintingverarbeitung an einer zweiten verschwommenen Region, die durch die verschwommenen Zwischenpixel im ersten Inpaintingbild definiert ist, um ein zweites Inpaintingbild zu erhalten; und

eine Bestimmungseinheit (1505), die dazu ausgelegt ist, ein Zielinpaintingbild, das dem maskenverarbeiteten Bild entspricht, auf Basis des zweiten Inpaintingbildes zu bestimmen.

14. Elektronische Vorrichtung, die Folgendes umfasst: einen Speicher (1601) und einen Prozessor (1602);

wobei der Speicher (1601) dazu ausgelegt ist, ein Computerprogramm zu speichern; und
wobei der Prozessor (1602) dazu ausgelegt ist, das Computerprogramm auszuführen, um die Operationen des Verfahrens nach einem der Ansprüche 1 bis 12 zu implementieren.

15. Computerlesbares Speichermedium, auf dem ein Computerprogramm gespeichert ist, wobei das Computerprogramm, wenn es von einem Prozessor ausgeführt wird, die Operationen des Verfahrens nach einem der Ansprüche 1 bis 12 implementiert.


**Revendications**

1. Procédé de traitement d'images, exécutable par un dispositif informatique, le procédé comprenant :

la réalisation (S400) d'un traitement de masque sur un objet de premier type compris dans une image de trame vidéo d'entrée afin d'obtenir une image traitée par masque, l'objet de premier type étant un élément d'image à retoucher ;
la réalisation (S401) d'un traitement de retouche sur l'objet de premier type dans l'image afin d'obtenir une première image retouchée, **caractérisé en ce que** le procédé comprend en outre :

la génération d'un gabarit de masque initial d'image sur la base d'une première région floue dans la première image retouchée ;
lorsqu'une première quantité de pixels flous initiaux compris dans le gabarit de masque initial d'image atteint un premier seuil, la réalisation (S402) d'un traitement morphologique sur la première région floue définie par les pixels flous initiaux afin d'obtenir un gabarit de masque cible d'image ;
lorsqu'une deuxième quantité de pixels flous intermédiaires compris dans le gabarit de masque cible d'image atteint un deuxième seuil, la réalisation (S403) d'un traitement de retouche sur une deuxième région floue définie par les pixels flous intermédiaires dans la première image retouchée afin d'obtenir une deuxième image retouchée ; et
la détermination (S404) d'une image retouchée cible correspondant à l'image traitée par masque sur la base de la deuxième image retouchée.

2. Procédé selon la revendication 1, dans lequel la réalisation (S401) d'un traitement de retouche sur l'objet de premier type dans l'image afin d'obtenir une première image retouchée, et la génération d'un gabarit de masque initial d'image sur la base d'une première région floue dans la première image retouchée comprennent :

l'entrée d'une séquence vidéo comprenant l'image traitée par masque dans un modèle de propagation d'informations entraîné ; et
dans le modèle de propagation d'informations entraîné, la réalisation d'un traitement de retouche sur l'objet de premier type dans l'image traitée par masque sur la base d'un élément d'image dans une autre image de trame vidéo dans la séquence vidéo afin d'obtenir la première image retouchée, et la génération du gabarit de masque initial d'image sur la base de la première région floue dans la première image retouchée.

3. Procédé selon la revendication 2, dans lequel le procédé comprend en outre :

l'entrée d'un gabarit de masque initial d'objet dans le modèle de propagation d'informations entraîné, le gabarit de masque initial d'objet étant déterminé après identification d'un objet de deuxième type compris dans l'image de trame vidéo, et l'objet de deuxième type étant un élément d'image qui doit être réservé ; et
la réalisation, dans le modèle de propagation d'informations entraîné, d'un traitement de complémentation de contour d'objet sur l'objet de deuxième type dans le gabarit de masque initial d'objet afin d'obtenir un gabarit de masque cible d'objet.

4. Procédé selon la revendication 3, dans lequel la détermination (S404) d'une image retouchée cible correspondant à l'image traitée par masque sur la base de la deuxième image retouchée comprend :

la comparaison (S1106) du gabarit de masque initial d'objet avec le gabarit de masque cible d'objet afin d'obtenir un premier résultat de comparaison, le premier résultat de comparaison indiquant si les contours des objets de deuxième type sont cohérents ; et
le traitement de la deuxième image retouchée sur la base du premier résultat de comparaison afin d'obtenir l'image retouchée cible.

5. Procédé selon la revendication 4, dans lequel le traitement de la deuxième image retouchée sur la base du premier résultat de comparaison afin d'obtenir l'image retouchée cible comprend :

si le premier résultat de comparaison indique que les contours des objets de deuxième type sont incohérents, la réalisation (S1108) d'un traitement de retouche sur une région de pixel correspondant à l'objet de deuxième type dans la deuxième image retouchée afin d'obtenir une troisième image retouchée, et l'utilisation de la troisième image retouchée comme image retouchée cible ; et
l'utilisation (S1107) de la deuxième image retouchée comme image retouchée cible si le premier résultat de comparaison indique que les contours des objets de deuxième type sont cohérents.

6. Procédé selon la revendication 2 ou 3, dans lequel le modèle de propagation d'informations entraîné est entraîné : en effectuant un entraînement itératif cyclique sur un modèle de propagation d'informations selon un échantillon d'entraînement dans un ensemble de données d'échantillon d'entraînement afin d'obtenir le modèle de propagation d'informations entraîné, dans lequel les opérations suivantes sont effectuées dans un processus itératif cyclique :

sélectionner (S1401) un échantillon d'entraînement dans l'ensemble de données d'échantillon d'entraînement ; l'échantillon d'entraînement comprenant : une image historique obtenue après qu'un traitement de masque a été effectué sur un élément d'image à retoucher, et un gabarit de masque historique d'objet correspondant à un élément d'image qui doit être réservé dans l'image historique ;
entrer (S1401) l'échantillon d'entraînement dans le modèle de propagation d'informations, prédire (S1402) une image retouchée de prédiction correspondant à l'image historique, et
générer (S1402) un gabarit de masque de prédiction d'image et un gabarit de masque de prédiction d'objet correspondant au gabarit de masque historique d'objet sur la base d'une région floue de prédiction dans l'image retouchée de prédiction ; et
effectuer (S1405) un ajustement de paramètres sur le modèle de propagation d'informations en utilisant une fonction de perte cible construite sur la base de l'image retouchée de prédiction, du gabarit de masque de prédiction d'image et du gabarit de masque de prédiction d'objet.

7. Procédé selon la revendication 6, dans lequel l'échantillon d'entraînement comprend en outre : une image retouchée réelle correspondant à l'image historique, et un gabarit de masque réel d'objet correspondant au gabarit de masque historique d'objet ; et
la fonction de perte cible du modèle de propagation d'informations est construite :

en construisant (S1403) une fonction de perte de premier type sur la base de l'image retouchée de prédiction et de l'image retouchée réelle, en construisant une fonction de perte de deuxième type sur la base du gabarit de masque de prédiction d'image et d'un gabarit de masque intermédiaire d'image, et en construisant une fonction de perte de troisième type sur la base du gabarit de masque de prédiction d'objet et du gabarit de masque réel d'objet, le gabarit de masque intermédiaire d'image étant déterminé sur la base de l'image retouchée de prédiction et de l'image retouchée réelle ; et
en construisant (S1404) la fonction de perte cible sur la base de la fonction de perte de premier type, de la fonction de perte de deuxième type et de la fonction de perte de troisième type.

8. Procédé selon la revendication 7, dans lequel la fonction de perte de premier type est déterminée :

en déterminant une première fonction de sous-perte sur la base d'une valeur de pixel de différence d'image entre l'image retouchée de prédiction et l'image retouchée réelle ;

en déterminant une deuxième fonction de sous-perte sur la base d'un deuxième résultat de comparaison entre l'image retouchée de prédiction et l'image retouchée réelle, le deuxième résultat de comparaison indiquant si l'image retouchée de prédiction est cohérente avec l'image retouchée réelle ; et
en déterminant la fonction de perte de premier type sur la base de la première fonction de sous-perte et de la deuxième fonction de sous-perte.

9. Procédé selon la revendication 8, dans lequel la fonction de perte de deuxième type est déterminée :
en déterminant une troisième fonction de sous-perte sur la base d'une valeur de pixel de différence de masque entre le gabarit de masque de prédiction d'image et le gabarit de masque intermédiaire d'image, et en utilisant la troisième fonction de sous-perte comme fonction de perte de deuxième type.

10. Procédé selon la revendication 8 ou 9, dans lequel la fonction de perte de troisième type est déterminée :

en déterminant une quatrième fonction de sous-perte sur la base d'une valeur de pixel de différence d'objet entre le gabarit de masque de prédiction d'objet et un gabarit de masque réel d'objet historique ;
en déterminant une cinquième fonction de sous-perte sur la base de la similarité entre le gabarit de masque de prédiction d'objet et le gabarit de masque réel d'objet historique ; et
en déterminant la fonction de perte de troisième type sur la base de la quatrième fonction de sous-perte et de la cinquième fonction de sous-perte.

11. Procédé selon l'une des revendications 1 à 10, comprenant en outre :
l'utilisation (S1210) de la première image retouchée comme image retouchée cible correspondant à l'image traitée par masque lorsque la première quantité des pixels flous initiaux compris dans le gabarit de masque initial d'image est inférieure au premier seuil.

12. Procédé selon l'une des revendications 1 à 10, comprenant en outre :
l'utilisation (S1210) de la première image retouchée comme image retouchée cible correspondant à l'image traitée par masque lorsque la deuxième quantité des pixels flous intermédiaires compris dans le gabarit de masque cible d'image est inférieure au deuxième seuil.

13. Appareil de traitement d'image (1500), comprenant

une première unité de traitement (1501) configurée pour effectuer un traitement de masque sur un objet de premier type compris dans une image de trame vidéo d'entrée afin d'obtenir une image traitée par masque, l'objet de premier type étant un élément d'image à retoucher ;
une deuxième unité de traitement (1502) configurée pour : effectuer un traitement de retouche sur l'objet de premier type dans l'image traitée par masque afin d'obtenir une première image retouchée, **caractérisé en ce que** la deuxième unité de traitement est en outre configurée pour :

générer un gabarit de masque initial d'image sur la base d'une première région floue dans la première image retouchée ;
et **caractérisé en outre en ce que** l'appareil comprend en outre :

une troisième unité de traitement (1503) configurée pour : lorsqu'une première quantité de pixels flous initiaux compris dans le gabarit de masque initial d'image atteint un premier seuil, effectuer un traitement morphologique sur la première région floue définie par les pixels flous initiaux afin d'obtenir un gabarit de masque cible d'image ;
une quatrième unité de traitement (1504) configurée pour : lorsqu'une deuxième quantité de pixels flous intermédiaires compris dans le gabarit de masque cible d'image atteint un deuxième seuil, effectuer un traitement de retouche sur une deuxième région floue définie par les pixels flous intermédiaires dans la première image retouchée afin d'obtenir une deuxième image retouchée ; et
une unité de détermination (1505) configurée pour déterminer une image retouchée cible correspondant à l'image traitée par masque sur la base de la deuxième image retouchée.

14. Dispositif électronique, comprenant : une mémoire (1601) et un processeur (1602) ;

la mémoire (1601) étant configurée pour stocker un programme informatique ; et
le processeur (1602) étant configuré pour exécuter le programme informatique afin de mettre en œuvre les opérations du procédé selon l'une des revendications 1 à 12.

15. Support de stockage lisible par ordinateur dans lequel est stocké un programme informatique, le programme informatique, lorsqu'il est exécuté par un processeur, mettant en œuvre les opérations du procédé selon l'une des revendications 1 à 12.

**FIG. 1**

**FIG. 2**

**FIG. 3**

S400

Perform mask processing on a first-type object included in an obtained target video frame image to obtain a to-be-processed image after mask processing, where the first-type object is a to-be-inpainted image element

S401

Perform inpainting processing on the first-type object in the to-be-processed image to obtain a first inpainting image, and generate a corresponding image initial mask template based on an initial blurred region in the first inpainting image

S402

Perform, when a first quantity of initial blurred pixels included in the image initial mask template reaches a first threshold, morphological processing on an initial blurred region corresponding to the initial blurred pixel to obtain an image target mask template

S403

Perform, when a second quantity of intermediate blurred pixels included in the image target mask template reaches a second threshold, inpainting processing on a pixel region corresponding to the intermediate blurred pixel in the first inpainting image, to obtain a second inpainting image

S404

Determine a target inpainting image corresponding to the to-be-processed image based on the second inpainting image

FIG. 4

FIG. 5

FIG. 6

Two little bees, two little bees

Image processing

FIG. 7

Image processing

FIG. 8

Dilate

Erode

FIG. 9

FIG. 10

S1100

Perform mask processing on a first-type object included in an obtained target video frame image to obtain a to-be-processed image after mask processing, where the first-type object is a to-be-inpainted image element

S1101

Identify a second-type object included in the obtained video frame image, and determine an object initial mask template based on an identification result

S1102

Perform inpainting processing on the first-type object in the to-be-processed image to obtain a first inpainting image, and generate a corresponding image initial mask template based on an initial blurred region in the first inpainting image

S1103

Perform object contour complementation processing on the second-type object in the object initial mask template to obtain an object target mask template

S1104

Perform, when a first quantity of initial blurred pixels included in the image initial mask template reaches a first threshold, morphological processing on a blurred region corresponding to the initial blurred pixel to obtain an image target mask template

S1105

Perform, when a second quantity of intermediate blurred pixels included in the image target mask template reaches a second threshold, inpainting processing on a pixel region corresponding to the intermediate blurred pixel in the first inpainting image, to obtain a second inpainting image

S1106

Compare the object initial mask template with the object target mask template to determine whether contours of the second-type objects are consistent

No

Yes ↓ S1107

Use the second inpainting image as a target inpainting image

S1108

In the second inpainting image, perform inpainting processing on a pixel region corresponding to the second-type object to obtain a third inpainting image, and use the third inpainting image as the target inpainting image

FIG. 11

S1200

Perform mask processing on a first-type object included in an obtained target video frame image to obtain a to-be-processed image after mask processing, where the first-type object is a to-be-inpainted image element

S1201

Identify, by using a visual identity model, a second-type object included in the obtained target video frame image, and determine an object initial mask template of the second-type object based on an identification result

S1202

Input a video sequence that includes the to-be-processed image and a mask template sequence that includes the object initial mask template of the to-be-processed image into a trained information propagation model, and obtain a first inpainting image, an image initial mask template, and an object target mask template by using the trained information propagation model

S1203

No ← Determine whether a first quantity of initial blurred pixels included in the image initial mask template reaches a first threshold

Yes ↓ S1204

Perform morphological processing on a blurred region corresponding to the initial blurred pixel to obtain an image target mask template

S1205

No ← Determine whether a second quantity of intermediate blurred pixels included in the image target mask template reaches a second threshold

Yes ↓ S1206

Input the image target mask template and the first inpainting image into a trained image inpainting model, and obtain a second inpainting image by using the trained image inpainting model

S1207

Determine whether a contour of the second-type object included in the object initial mask template and a contour of the second-type object included in the object target mask template are consistent → Yes

No ↓ S1208

Input the second inpainting image and the object target mask template into a trained object inpainting model, and obtain a third inpainting image by using the trained object inpainting model

S1209

Use the third inpainting image as a target inpainting image corresponding to the to-be-processed image

S1210

Use the first inpainting image as the target inpainting image corresponding to the to-be-processed image

S1211

Use the second inpainting image as the target inpainting image corresponding to the to-be-processed image

FIG. 12

FIG. 13

S1400

Obtain a training sample data set, where the training sample data set includes at least one group of training samples, and each group of training samples includes: a historical image obtained after mask processing is performed on a to-be-inpainted image element and a corresponding actual inpainting image, and an object historical mask template corresponding to an image element that needs to be reserved in the historical image and a corresponding object actual mask template

S1401

Select a training sample from the training sample data set, and input the training sample into a to-be-trained information propagation model

S1402

Predict a prediction inpainting image corresponding to the historical image by using the to-be-trained information propagation model, and generate an image prediction mask template and an object prediction mask template corresponding to the object historical mask template based on a prediction blurred region failing to meet image quality in the prediction inpainting image

S1403

Construct a first-type loss function based on the prediction inpainting image and the actual inpainting image, construct a second-type loss function based on the image prediction mask template and an image intermediate mask template, and construct a third-type loss function based on the object prediction mask template and the object actual mask template, the image intermediate mask template being determined based on the prediction inpainting image and the actual inpainting image

S1404

Construct the target loss function based on the first-type loss function, the second-type loss function, and the third-type loss function

S1405

Perform parameter adjustment on the to-be-trained information propagation model based on the target loss function

FIG. 14

Image processing apparatus 1500

First processing unit 1501

Second processing unit 1502

Third processing unit 1503

Fourth processing unit 1504

Determining unit 1505

FIG. 15

1603
Communication module

1602
Processor

Bus 1604

1601
Memory

FIG. 16

FIG. 17

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211029204
- US 2012113093 A1
- CN 110533604 A